# EUROPEAN PATENT SPECIFICATION

(11) **EP 1 262 000 B1**
(45) Date of publication and mention of the grant of the patent: **14.12.2005**
(21) Application number: 01915251.1
(22) Date of filing: 14.02.2001
(51) Int. Cl.: H01R 12/16

(54) **ERGONOMIC ELECTRICAL CONNECTOR FOR A SMART CARD**
ERGONOMISCHER ELEKTRISCHER VERBINDER FÜR CHIPKARTEN
CONNECTEUR ELECTRIQUE ERGONOMIQUE POUR CARTE A MEMOIRE

(30) Priority: 18.02.2000 FR 0002006
(43) Date of publication of application: 04.12.2002
(73) Proprietor: ITT MANUFACTURING ENTERPRISES, INC., Wilmington, Delaware 19801 (US)
(72) Inventor: BRICAUD, Hervé, F-39100 Dole (FR); PIZARD, Yves, F-39100 Dole (FR); VALCHER, Fabrice, F-39100 Dole (FR)
(74) Representative: Kohn, Philippe
(86) International application number: PCT/EP2001/001640
(87) International publication number: WO 2001/061790

(56) References cited:
- EP-A- 0 959 423
- EP-B- 0 515 897
- WO-A-98/13784

## Description

The present invention relates to an electrical connector for a contact-type smart card, also called an electronic memory card or chip card.

The invention relates more particularly to a connector used for connecting the card to read/write circuits belonging to an electronic apparatus or equipment, such as, for example, a GSM-type mobile telephone, or a communication terminal, with which the connector is fitted.

According to the various known designs of such cards, which may or may not be standardized, the card is of rectangular general shape and has, on one of its faces, here called by convention the lower face of the card, conducting pads which, when the card has been put into a contact position, also called the use position of the card, engage with the contacting ends of electrical conductors belonging to the connector and which are connected to the read/write circuits of the electronic equipment.

In the case of so-called "chip" cards, the conducting pads are generally grouped together in the form of a block of adjacent pads which is arranged so as to be more or less central in the lower face of the card, that is to say at a certain distance from the lateral and transverse edges of the card, the total dimensions of which may be quite significant, if they are compared with those of the block of conducting pads, especially according to the standardized card type used, namely "SIM", "MICROSIM", etc.

In the case of a card having a high memory capacity, such as a card called a "MEMORYCARD", the conducting pads are grouped together in a series of parallel adjacent pads which extend as far as a transverse edge of the card.

In the case of a very large number of applications, the card is put manually into the contact or use position in the connector, and therefore in the equipment with which it is associated, that is to say the equipment does not include means for transferring the card between a position for manually loading the card into a carriage or into a card-holding slide-in unit and the card-contacting position in which it is housed in a complementary housing of the connector.

According to various known arrangements, the card is thus inserted manually, directly into the housing of the connector, in a longitudinal insertion direction parallel to the general plane of the card, that is to say it is necessary to have a clear space and/or a corresponding slot in the equipment allowing this type of handling.

Arrangements are also known in which the card is put into position vertically in the housing by moving it upwards perpendicular to its general plane. In this case, the space available above the housing of the connector must be at least equal to the longitudinal and transverse dimensions of the card and a fixed or moveable locking device, forming part of the electronic apparatus, allows the card to be locked in position in the connector.

Finally, connector designs are known in which the connectors include a hinged cap which has a cavity in which the user puts the card into position before closing the cap in order to bring the card into the contact position. In this case, the card is inserted "obliquely" so as to be inclined in a direction making an angle with respect to the horizontal plane of the base or support of the connector which carries the conducting elements. In order to be able to open the cap of the connector, this approach also requires there to be a sufficient space around and above the connector.

In all the cases that have just been mentioned, the overall size of the connector can be reduced to its minimum, but it remains necessary to have, around the connector or above the latter, a large space so as to allow the card to be put into position in the connector and, in all cases, the space that has to be provided around the connector is greater, at least in one direction, than the corresponding dimension of the card.

In order to solve this problem, a design has already been proposed, in document EP-B1-0.515.897, in which the card is put into position in the connector by inserting it in a vertical overall direction, downwards, by being located above the connector and by presenting the card in an inclined manner with respect to the horizontal.

This design is generally satisfactory from the standpoint of the total size of the connector, the dimensions of which are small, and it makes it possible to reduce the necessary space available around and above the connector in so far as putting the card into position only requires space above the connector.

However, this design has many drawbacks.

First of all, it requires the user to bring the card into a position and in an orientation which is very precise with respect to the insulating support in so far as the edge 102 of the card must be inserted into a "sprung gripper" formed by a fixed rim 15 and by two sprung arms 17 and 18. The ergonomics are thus not ideal in so far as the user must also push on the card in order to insert it into the gripper.

Next, if the user does not continue his action, the card remains in its favoured inclined position and runs the risk of remaining in this position, in which the telephone cannot be used and in which it may impede or prevent closure of a cover over the hatch for access to the connector which may also be a storage battery unit.

In the inserted position, the card is permanently pressed elastically by the sprung arms, and this may impair reliable contact between the card and the contact blades 11.

When the apparatus fitted with the connector with the card is subjected to very high temperatures, the card may deform and this phenomenon is accentuated by the sprung arms which push on the lower face of the card, which thus deforms and the contact may then be broken.

Again in the case of high temperatures, something which may for example be the case when a mobile telephone is left exposed to the sun, or during the fastening operations in which the connector is reflow-soldered to a printed-circuit board, the sprung arms are also heated and may rapidly lose their dimensional and elastic characteristics, this making the connector unusable.

The type of locking of the card in the read position which is proposed in that document relies on an elastically deformable part of the insulating support, which is very difficult to manipulate, as it is not very accessible, and the reliability of which, especially in the case of heating, is uncertain.

In addition, this lock 19, like the sprung arms 17 and 18, generates permanent stresses in the card which in the long term are deleterious to the proper operation of the "chip" contained in the card.

Nor does the design proposed in that document make it possible, when the card is in the contact position, to hold it over the major part of its upper face for the purpose, in particular, of preventing it from deforming, and also for the purpose of providing an electromagnetic screening function.

Similar comments can be made with respect to document WO-A-98/13784.

In order to remedy these drawbacks, the invention provides an electrical connector for a contact-type smart card, of rectangular general shape, having on its lower main face conducting pads which, when the card has been put manually in an approximately horizontal contact position, engaging with the contacting ends of electrical conductors in the form of elastically deformable blades arranged in the horizontal bottom of a card housing which is at least partly formed in a support made of insulating material, which is open in its upper face, the housing being bounded laterally and transversely by two pairs of parallel edges for positioning the card in the housing, the connector having an edge for guiding the card when putting the card into the housing, said guiding edge lying above the housing, parallel to a first of the parallel edges of the housing, the upper face of the card engaging with said guiding edge in order to allow the card to be inserted into the housing in an inclined plane parallel to the guiding edge. The invention is characterized by the features defined by claim 1.

Further characteristics and advantages of the invention will become apparent on reading the detailed description which follows, for the understanding of which reference will be made to the appended drawings in which :

### Figures depicting a first connector

- Figure 1 is a left front three-quarter top perspective view which illustrates a connector which is shown without a card and in which the means for retaining the card in the contact or use position are fixed means ; This connector does not belong to the invention.
- Figure 2 is a left rear three-quarter bottom perspective view of the connector illustrated in Figure 1 ;
- Figure 3 is a view similar to that in Figure 1, in which the two main components of the connector are shown exploded ;
- Figure 4 is a top view of the connector illustrated in Figure 1 ;
- Figure 5 is a view similar to that in Figure 1, in which a card in the process of being put into position in the housing of the connector has been shown ;
- Figure 6 is a view similar to that in Figure 5, in which the card is shown in the contact position in its housing ;

### Figures depicting a second connector

- Figure 7 is a view similar to that in Figure 1, which illustrates another a connector which includes a moveable element for retaining the card in the contact position, made in the form of a lock mounted so as to slide transversely and shown in the open or retracted position allowing the card to be inserted for the purpose of putting it into the contact position in the housing ; This connector dos not belong to the invention.
- Figure 8 is a view similar to that in Figure 4, in which the sliding lock is shown in the closed position for retaining the card in the contact position in which part of the retaining element lies above the upper face of the card ;
- Figure 9 is a view similar to that in Figure 6, in which the sliding lock is shown in the closed position ;

### First invention embodiment

- Figure 10 is a right front three-quarter top perspective view which illustrates a first embodiment of a connector according to the invention, which has a moveable element for retaining the card in the contact position, made in the form of a mounted flap which is mounted so as to be hinged to the insulating support of the connector and which is shown in the open position, and which includes a sliding lock for locking the flap in the closed position, the lock being shown in the unlocked position ;
- Figure 11 is a view similar to that in Figure 10, in which the flap is in the closed position and the lock in the locked position ;
- Figure 12 is a top view of the connector illustrated in Figure 11 ;
- Figure 13 is a side view looking along the arrow F13 shown in Figure 12 ;
- Figure 14 is a view similar to that in Figure 13, in which the card-retaining flap is shown in the open position, the lock being in the unlocked position, and in which three different positions of the card have been shown in outline ;
- Figure 15 is a view similar to that in Figure 12, in which a card has been shown in the contact position ;

### Second invention embodiment

- Figure 16 is a right front three-quarter top perspective view which illustrates a second embodiment of a connector according to the invention, which has a moveable element for retaining the card in the contact position made in the form of a mounted flap which is mounted so as to be hinged to the insulating support of the connector and which is shown in the open vertical position ;
- Figure 17 is a left front three-quarter top perspective view of the connector illustrated in Figure 16 ;
- Figure 18 is a left rear three-quarter top perspective view of the connector illustrated in Figure 16 ;
- Figure 19 is a view on a larger scale and in cross section on the line 19-19 shown in Figure 20 ;
- Figure 20 is a top view of the connector illustrated in Figures 16 to 18 ;
- Figure 21 is a side view looking along the arrow F21 shown in Figure 20 ;
- Figure 22 is a side view looking along the arrow F21 shown in Figure 20 ;
- Figure 23 is a right rear three-quarter top perspective view, in which the flap is shown in the closed horizontal position, but is not locked ;
- Figure 24 is a left rear three-quarter bottom perspective view ;
- Figures 25 to 27 are views similar to those in Figures 20 to 22, which show the connector in its state illustrated in Figure 23 ;
- Figure 28 is a view similar to that in Figure 23, in which the card-retaining flap is shown in the closed position and is locked ;
- Figure 29 is a view similar to that in Figure 24, which illustrates the connector in its state shown in Figure 28 ;
- Figure 30 is a view similar to that in Figure 19, which illustrates the connector in its state shown in Figure 28 ;
- Figure 31 is a longitudinal end view of the connector illustrated in Figure 19 ;
- Figure 32 is a view similar to that in Figure 17, in which a card in the process of being put into position in its housing has been shown ;
- Figure 33 is a view similar to that in Figure 23, with a card in the contact position ;
- Figure 34 is a view similar to that in Figure 33, in which the flap is in the closed position and is locked ;
- Figures 35 to 37 are views similar to those in Figures 25 to 27 and illustrate the connector in its state shown in Figure 34 ;
- Figures 38 and 39 are views similar to those in Figures 23 and 24, in which the connector is shown without its metal card-retaining flap ;

### Third invention embodiment

- Figure 40 is a view similar to that in Figure 16, which illustrates a third embodiment of a connector according to the invention, which has a moveable element for retaining the card in the contact position, made in the form of a mounted flap which is mounted so as to be hinged to the insulating support of the connector and which includes, in addition, means for the temporary partial holding of the card with respect to the flap and spring means for automatically opening the flap ;
- Figure 41 is a view on a larger scale of detail D41 shown in Figure 40 ;
- Figure 42 and 43, 44 to 46, 47 and 48, 49 to 51, 52, 53, 54, and 55 are views similar to those in Figures 18 and 19, 20 to 22, 23 and 24, 25 to 27, 28, 30, 31 and 29, which illustrate the connector according to the fifth embodiment, respectively ;
- Figure 56 is a left front three-quarter view similar to that in Figure 40, in which the card vertically inserted into the flap, which is held in the vertical open position by a return spring in the open position, has been shown ;
- Figure 57 is a right rear three-quarter view similar to that in Figure 56 ;
- Figures 58 to 60 are views similar to those of Figures 44 to 46 and in which the card and the flap are in the position illustrated in Figures 56 and 57 ;
- Figure 61 is a view similar to that in Figure 47, with the card in the contact position ;
- Figure 62 is a view similar to that in Figure 52, with the card in the contact position ;
- Figures 63 to 65 are views similar to those in Figures 58 to 60 and which illustrate the connector and the card in the position illustrated in Figure 62, that is to say with the flap in the closed and locked horizontal position ;
- Figure 66 is a view similar to that in Figures 42 and 47, in which the connector is shown without its hinged flap ;
- Figure 67 is a bottom view of Figure 66 ;
- Figure 68 is a view similar to that in Figure 66, in which only the insulating support made of moulded plastic has been shown, that is to say shown without the contact blades and without the return spring of the flap ;
- Figure 69 is a top perspective view on a larger scale of the return spring of the flap ;
- Figure 70 is a left rear three-quarter perspective view of just the closure flap ;
- Figure 71 is a bottom view of the flap shown in Figure 70 ;
- Figure 72 is a view similar to that in Figure 19, in which the flap and the card are shown in the same position as in Figures 56 and 57, the card being in the process of being inserted vertically into the flap ;
- Figure 73 is a view similar to that in Figure 72, in which the card is in the inserted vertical position ;
- Figure 74 is a view similar to that in Figure 40, in which the card has been shown, on the one hand, in outline in its position corresponding to Figure 73 and, on the other hand, in solid lines in a tilted position that it occupies as soon as the flap starts to be closed or when the card is released ;
- Figure 75 is a view similar to those in Figures 72 and 73,
   in which the card is shown in various positions making it possible to illustrate the tilting movement of the card, by its pivoting and sliding ;
- Figure 76 is a view similar to that in Figure 75, in which the card is in the stable inclined position and the flap is in the open vertical position ;
- Figures 77 and 78 are two views similar to that in Figure 76, illustrating the two next steps in closing the flap ;
- Figure 79 is a view similar to that in Figure 60, in partial cross section, in which the card is illustrated in the stable position after the flap has been automatically unlocked and under the action of the return spring ;

### Fourth invention embodiment

- Figure 80 is a view similar to that in Figure 40, which illustrates a fourth embodiment of a connector according to the invention, which is basically similar to the third embodiment but which differs therefrom only by dint of the nature of the means for hinging the flap to the insulating support and of the means for locking the flap in the closed and locked position ;
- Figure 81 is a right front three-quarter perspective view in which the flap is illustrated in the closed but unlocked position ;
- Figure 82 is a view on a larger scale of detail D81 shown in Figure 81 ;
- Figure 83 is a right rear three-quarter view of the connector illustrated in Figure 81 ;
- Figures 84 and 85 are views similar to those in Figures 49 and 50, which illustrate the connector in its state shown in Figures 81 and 83 ;
- Figure 86 is a view on a larger scale of detail D86 shown in Figure 85 ;
- Figures 87 to 89 are views similar to those in Figures 81 to 83, which illustrate the connector with the flap closed and locked ;
- Figures 90, 92 and 93 are views similar to those in Figures 87, 88 and 89, in which the flap is illustrated in its closed and locked position ;
- Figure 91 is a view on a larger scale and in partial cross section of detail D91 shown in Figure 90 ;
- Figures 94, 95 and 96 are views similar to those in Figures 90, 91 and 92, in which the connector is illustrated with its flap in the process of being unlocked ;
- Figure 97 is a right front three-quarter perspective view of just the closure flap ;

### Fifth invention embodiment

- Figures 98 and 99 are views similar to those in Figures 87 and 89, with a card in the connector, which illustrate a fifth embodiment in which the hinge tabs of the flap are transversely deformable in a vertical plane ;
- Figures 100 and 101 are views similar to those in Figures 98 and 99, in which the flap is in the retracted rear unlocking position ;
- Figure 102 is a right side view of Figure 100 ;
- Figure 103 is a view similar to that in Figure 102, in which the flap is in the unlocked and slightly open rear position ;
- Figure 104 is a right front three-quarter perspective view of the connector without a card and with the closure flap in the completely open position ;
- Figures 105 to 109 are schematic views illustrating alternative embodiments of the sprung arms for hinging the closure flap ;
- Figure 110 is a view similar to that in Figure 40, which illustrates an alternative embodiment of the means for locking the flap in the closed position.

In the description which follows, identical, analogous or similar components will be denoted by the same reference numbers.

The figures show various embodiments of an electrical connector 110 of known overall design, which essentially consists of a contact-carrying insulating support 112 which is in the form of a moulded plastic part of rectangular general shape.

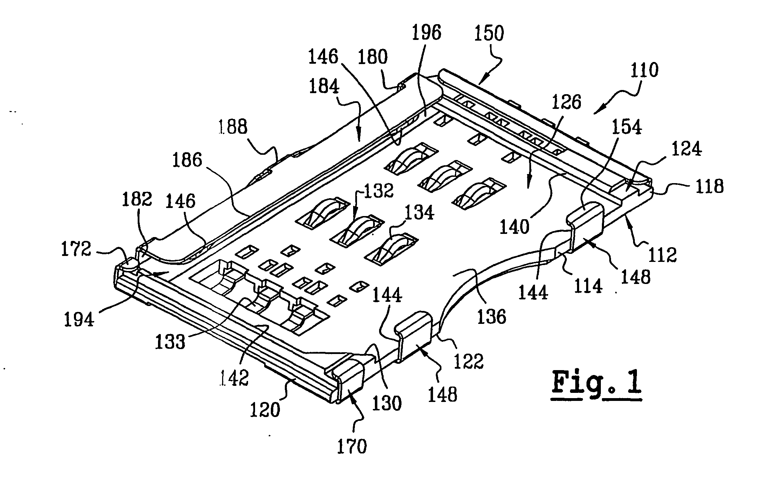

By convention, a horizontal and vertical orientation will be adopted with reference to the figures, and for example with reference to Figure 1.

Thus, the insulating supporting 112 is in the form of a horizontal rectangular plate which is bounded by a long front longitudinal edge 114, a parallel rear longitudinal edge 116, a right transverse edge 118 and a parallel left transverse edge 120.

The insulating support 112 is also bounded by a horizontal lower face 122 and by a parallel horizontal upper face 124.

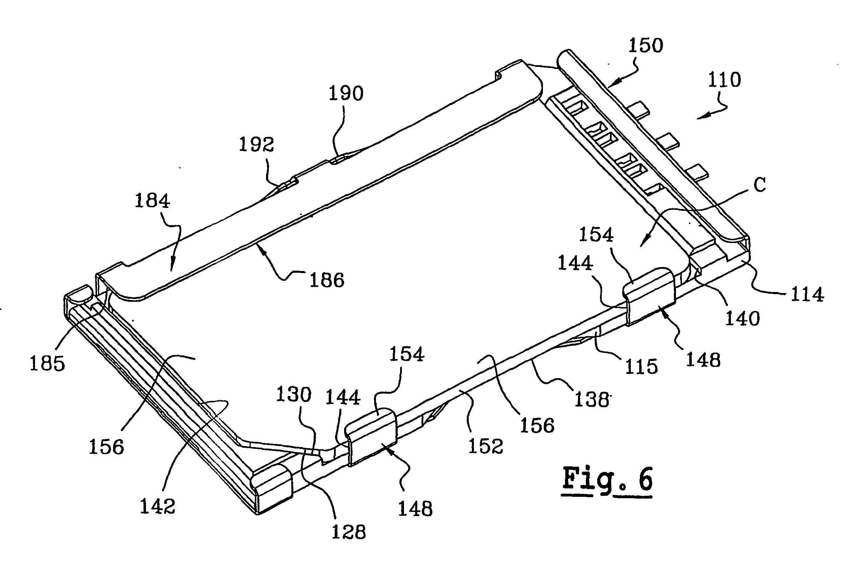

In a known manner, a housing 126, open vertically upwards, is formed in the upper face 124 and has an overall shape complementary to the rectangular general shape of the card C (see for example Figure 6) which it houses in the contact or use position.

In the examples illustrated in the figures, a card C is a standardized MICROSIM card, the general outline of which is rectangular and with rounded corners, the card having a 45° chamfer 128 for correctly orienting the card, the chamfer being provided for engaging with a corresponding chamfer 130 on the housing 126 which, in the embodiments illustrated in Figures 1 to 9, corresponds to the left front corner of the housing 126 whereas, in the other embodiments that follow, it corresponds to the right rear corner of the housing 126.

In a known manner, the insulating support 112 carries a series of contact blades 132 which here are oriented longitudinally and are six in number, these being aligned longitudinally in pairs. Of course, it is possible to produce a connector with four pairs, i.e. eight contacts, in order to use the eight contact pads on the card.

Each contact blade 132 has a free end or lead 133 for connection to a conducting track on a printed-circuit board (not shown) onto which the connector 110 is fixed.

At the opposite end, each contact blade 132 has a free contacting end 134 having the general shape of an upside-down spoon, which projects vertically from the horizontal upper face 136 forming the bottom of the housing 126, each contacting end 134 being capable of elastically flexing vertically downwards so as to ensure a good-quality contact with the corresponding pads 139 (not shown in the first figures) formed on the lower horizontal face 138 when the latter is in place in the horizontal contact (or use) position in the housing 126 by being pressed against the bottom 136 of the latter, or by being held slightly above the latter and parallel to the bottom due to the elastic return action applied to the lower face of the card by the contacting ends 134 of the blades 132.

The housing 126 is bounded longitudinally by two transverse edges, the right transverse edge 140 and the left transverse edge 142, which are parallel and, in all embodiments, moulded as one piece with the insulating support 112.

In order to hold the card in a correct transverse position with respect to the contacting ends 134, the housing 126 is, of course, also bounded transversely by two longitudinal edges, the front longitudinal edge 144 and the rear longitudinal edge 146, or by elements fulfilling this same longitudinal edge function.

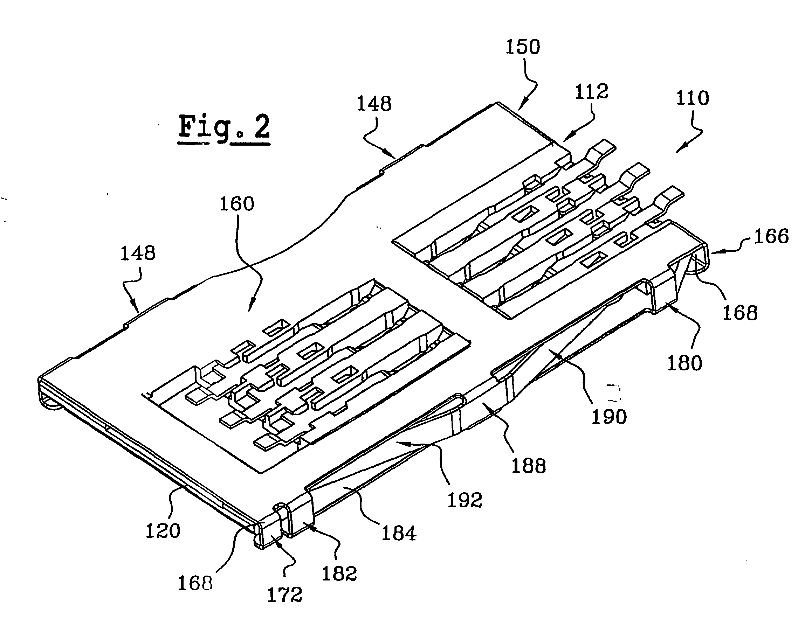

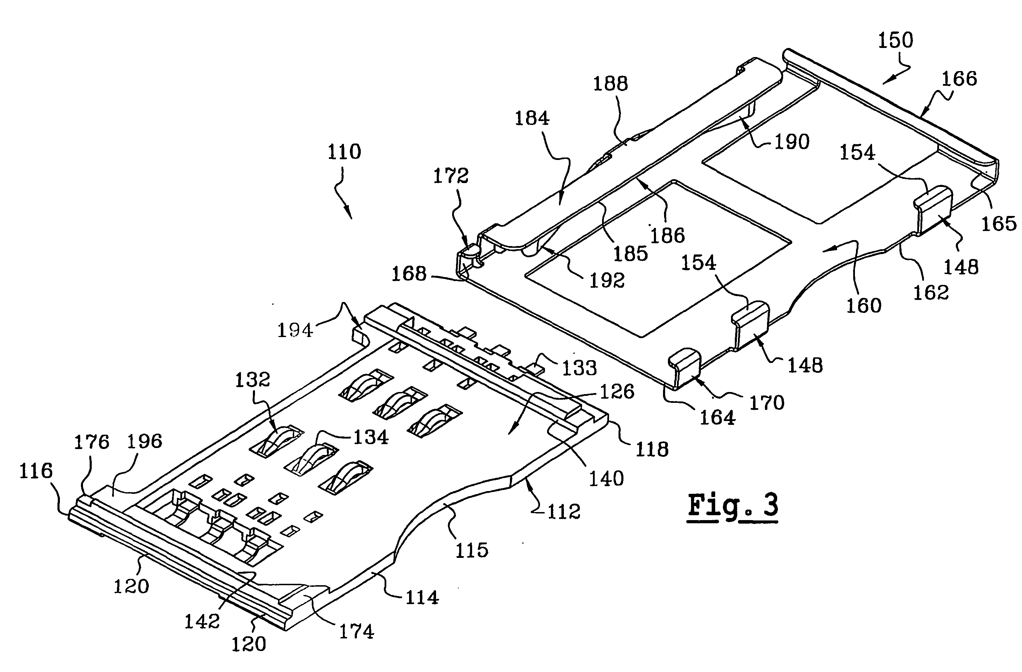

In the embodiment illustrated in Figures 1 to 6, the front longitudinal edge of the housing 126 is formed by the internal faces 144 of two vertical oriented tabs 148 which are part of a cut and folded metal element 150 which is attached and is more particularly visible in Figures 2 and 3.

When the card is in the contact position, as may be seen in Figure 6, a front longitudinal edge 152 of the card C bears against the internal faces 144 of the tabs 148, each of which is bent over through 90° so as to be extended transversely from the front rearwards by a horizontal lip 154 which lies vertically above the upper 156 of the card in order to form two vertical stops which position the card, upwards, under the elastic action of the contact blades 132, 134.

The attached metal element 150 is, as may be especially seen in Figure 3, in the form of a cage having a horizontal apertured bottom plate 160 bounded by a front longitudinal edge 162 from which the tabs 148 extend, by a left transverse edge 164 and by a right transverse edge 165 from which a bent-over tab 166 extends allowing the metal component 150 to be longitudinally positioned with respect to the insulating support 112 by butting longitudinally against the right transverse edge 118.

The lower plate or base 160 of the element 150 is also bounded by a rear longitudinal edge 168.

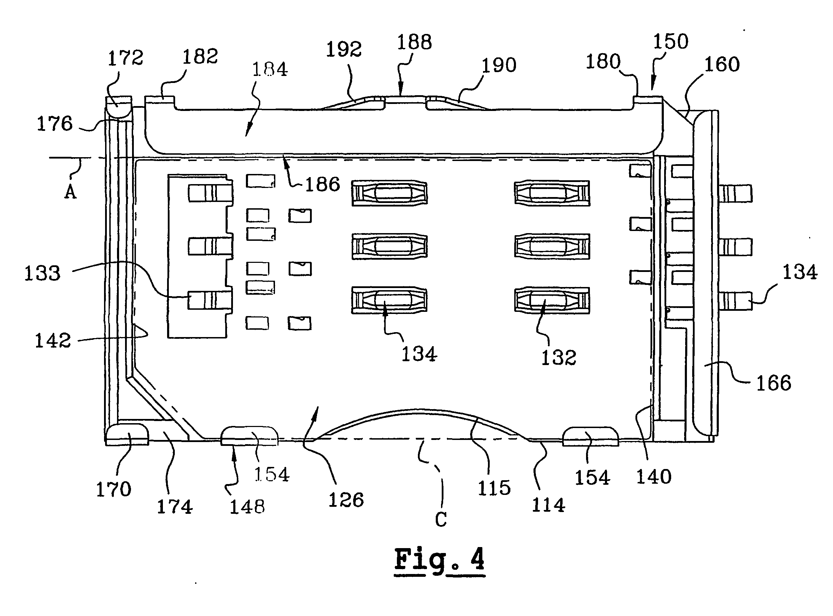

In order to position it and fix it to the insulating support 112, the element 150 also has two tabs bent through 90°, namely the left front tab 170 and the left rear tab 172, which are housed in corresponding recesses 174 and 176 (see Figures 3 and 4).

As may be seen in Figures 2 and 3, the metal component 150 also has two rear vertical tabs, namely the right rear vertical tab 180 and the left rear vertical tab 182, which extend vertically upwards from the rear longitudinal edge 168 of the plate 160 and which carry, at their upper free end, a long horizontal tab 184 which extends (in a horizontal plane) inwards, that is to say towards the front above the insulating support 112 and above the housing 126, being transversely bounded towards the front by a longitudinal edge 186.

The longitudinal and horizontal orientation tab 184 is also joined to the lower plate 160 by a vertical central tab 188 from which two sprung arms extend longitudinally, namely the right arm 190 and the left arm 192, each of which forms a flexing elastic beam, the corresponding free end of which constitutes, via its face internal to the connector, a portion of the rear longitudinal edge 146 which forms the rear transverse boundary of the housing 126.

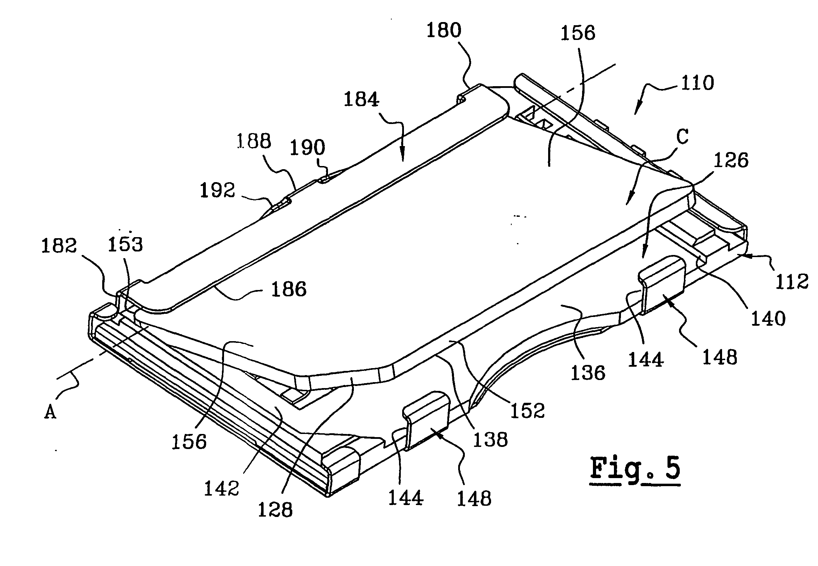

In this embodiment, the rear longitudinal edge 146 is therefore an edge which is generally elastically deformable in a horizontal transverse direction and is designed to engage with a corresponding rear longitudinal edge 153 of the card C (see Figures 5 and 6).

The two parts 146 of the elastically deformable arms 190 and 192 therefore constitute an edge or stop of longitudinal orientation against which the corresponding edge 153 of the card bears when the latter is being put into position in the housing 126, as will be explained later.

Right opposite this edge 146, the bottom 136 of the housing 126 has a recess 194, produced by moulding, which extends over the entire length of the housing 126 and the horizontal bottom 196 of which is therefore vertically offset downwards with respect to the horizontal plane of the bottom 136 of the housing 126, and therefore with respect to the plane of the lower face 138 of the card C when the latter is in the horizontal contact or use position.

The tab 184 lies horizontally in the same plane as the lips 154, that is to say its horizontal lower face 185 forms a vertical upwards bearing surface for the corresponding part opposite the upper face 156 of the card C when the latter is in the contact position and is pressed elastically upwards by the elastic contact blades 132, 134.

It may also be seen in Figures 1 to 6 that the front longitudinal edge 114 of the insulating support 112 has a circularly arcuate central indentation 115 making it easier for the card to be gripped in order to remove it from the housing.

The method of using the connector 110 will now be described, especially with regard to putting the card C in the housing 126 and for extracting it therefrom.

Figure 5 shows that the card C is inserted generally in an inclined orientation with respect to the horizontal and to the vertical.

The user brings the card into its position illustrated in Figure 5 in a vertical and then horizontal overall movement, inserting the rear longitudinal edge 153 under the tab 184 with the edge 186 which is in contact with the facing part of the upper face 156 of the card C.

This slanting movement for inserting the card C, that is to say a movement in an inclined manner and vertically downwards and then transversely rearwards, also ends up with the rear longitudinal edge 153 of the card C coming into contact with the edge 146 of the housing 126 formed by the two elastically deformable arms 190 and 192.

The movement of putting the card into position continues in the form of a combined movement of pivoting the card C about a horizontal axis A, which here is of longitudinal orientation and corresponds to the edge 186, and of sliding the card C along the edge 186 against the elastic force exerted by the arms 190 and 192.

This combination of a pivoting movement and a sliding movement allows the card to be inserted and positioned until it reaches an approximately horizontal position bearing against the bottom 136 after which the user can stop applying force exerted against the arms 190 and 192. When the user stops applying force, the card is pressed elastically by the arms 190 and 192 transversely from the rear forwards, that is to say from the left to the right with regard to Figure 5 and it then occupies its use position in which its front longitudinal edge 152 butts against the internal faces 144 of the tabs 148.

Likewise, the upper face 156 of the card C bears and butts vertically upwards, due to the elastic action of the contact blades 132, 134, against the lower faces of the lips 154 and against the horizontal lower face 185 of the tab 184 which then acts as a tab for the vertically upwards retention of the card C.

If the user exerts too great force against the arms 190 and 192 when inserting and positioning the card, these arms flex and the rear longitudinal edge 153 of the card bears against the facing, vertically oriented, internal faces of the tabs 180, 182 and 188 which, in all cases, thus constitute a transverse stop for the card during insertion.

In order to remove the card from the connector, starting from the position illustrated in Figure 6, the user exerts a rearwards transverse force, that is to say from the right to the left with regard to Figure 6, on the edge 152, this being easily achieved thanks to the indentation 115.

The user thus pushes the card C against the force exerted by the elastic arms 190 and 192 until the corresponding part of the upper face 156 previously engaged under the lips 154 is released, that is to say the card can be lifted vertically upwards, this lifting being performed almost automatically, although the user applies no force vertically downwards on the card C, because of the elastic return action that the contact blades 132 and 134 permanently exert on the lower face 138 of the card.

Due to the action of the blades 132, 134 and due to the action of the arms 190 and 192, the card then emerges from the housing 126 in a sliding movement in a plane inclined with respect to the horizontal and the user can then take hold of the card in order to extract it from the connector, generally in the vertical direction.

Referring to Figure 4, it may be seen overall that the pivoting axis A of the card when putting it into position in the housing 126, physically embodied by the edge 186 of the tab 184, lies above the housing 126, that is say that, in vertical projection, the axis A is inside the housing and inside the outer envelope or outline of the card C, which is shown in outline in Figure 4.

This geometrical arrangement of the pivoting axis A physically embodied by the edge 186 makes it possible to obtain satisfactory guiding during the combined pivoting and sliding movement, without correspondingly increasing excessively the total height of the connector, that is to say that part of the latter, formed here by the tab 184 of the attached element 150, which is bounded by the edge 186, is located at a minimum height with respect to the lower face of the connector, formed here by the lower face of the plate 160 of the attached metal element 150, this total height of the connector corresponding overall to the minimum necessary height (about 0.95 mm) for the structure of the insulating support 112 and to the standardized thickness of the card (0.84 mm maximum) with, as the only overthickness, the thickness (about 0.2 mm) of the retaining tab 184 and of the lips 154.

The design of the insulation and the choice of symmetrical spoon-shaped contacts with a convex domed profile make it possible to ensure that the contact blades are well protected, especially by preventing them from being damaged by catching, even when the longitudinal edge of the card is placed on the bottom 136 between two rows of contact blades, and all this being so for a total connector height of about 2 mm.

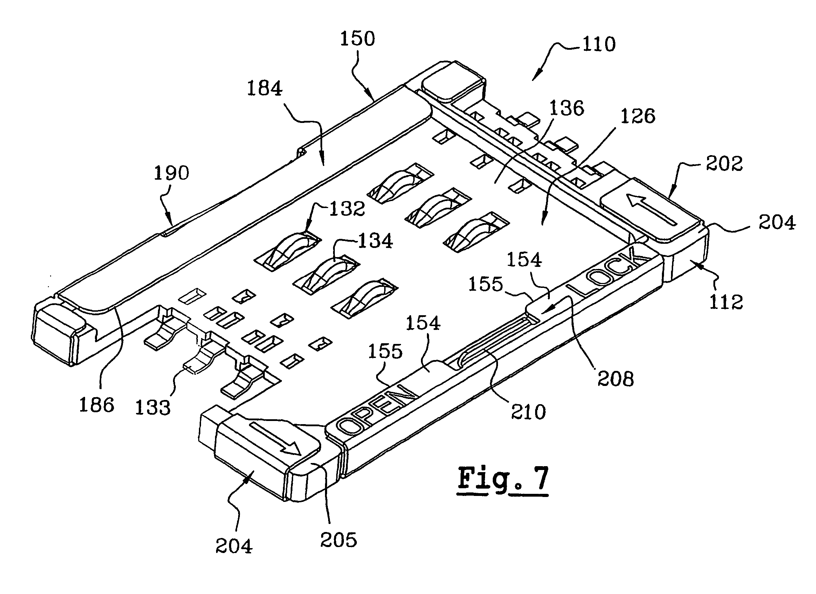

The embodiment illustrated in Figures 7 to 9 will now be described, by making a comparison with the first embodiment that has just been described with reference to Figures 1 to 6.

The rear part of the attached metal element 150 is basically equivalent to that of the first mentioned embodiment, except that it has only a single sprung arm 190.

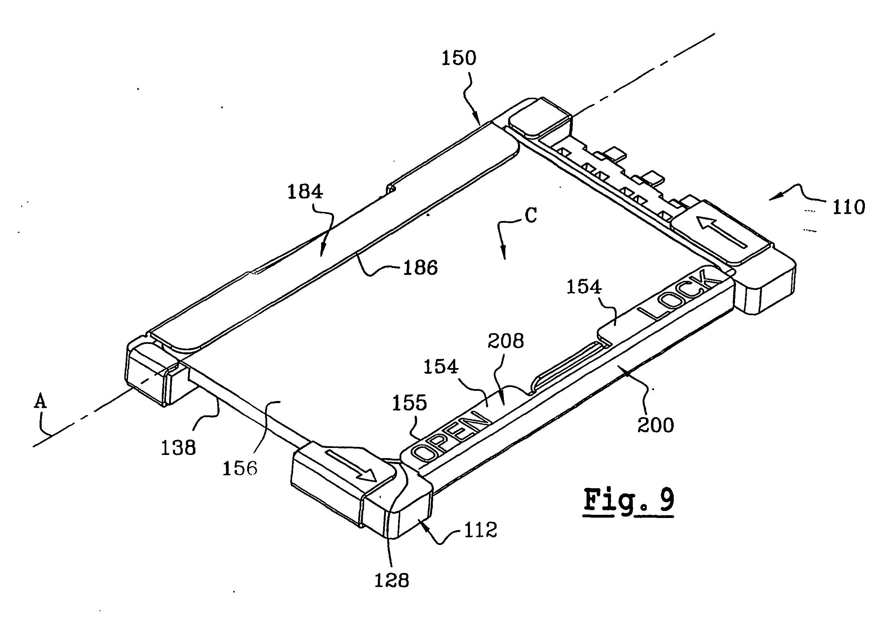

However, the element 150 does not have a front part in the form of the abovementioned tabs 148 so as to expose the front part of the insulating support 112 in order to be able to mount on it a locking member or lock 200 which is basically mounted so as to slide transversely in a horizontal plane with respect to the insulating support 112 between an open or unlocked position illustrated in Figure 7 and a closed position illustrated in Figure 9.

The lock 200 here is a metal piece guided so as to slide with respect to the insulating support 112 by means of two end tabs - a right end tab 202 and a left end tab 204 - having the shape of a U on its side, each of which thus defines a slideway which receives a corresponding part 205, 206 of the insulating support 112.

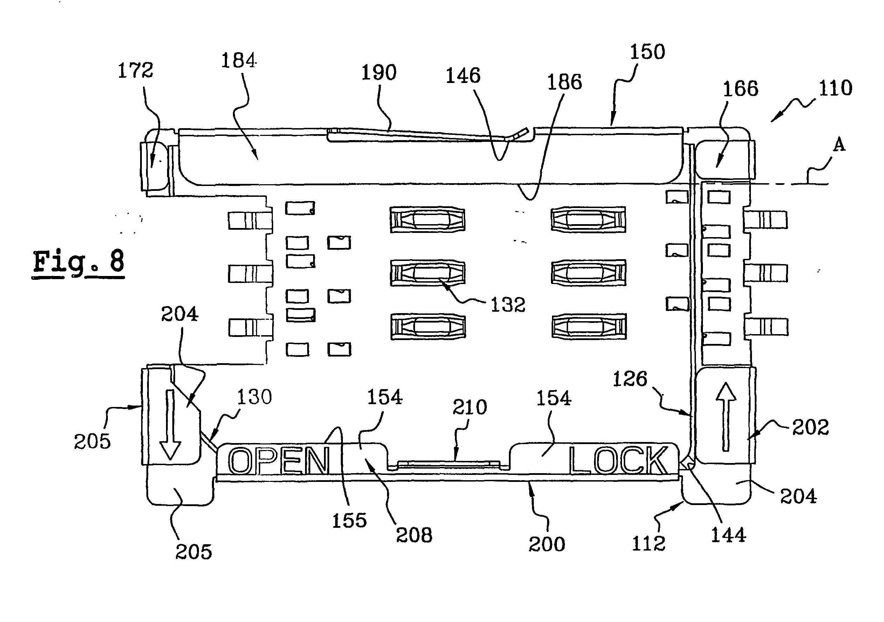

As may be seen in Figure 8, the front longitudinal edge 114 which defines the housing 126 is, in this case, moulded as one piece with the insulating support 112.

In order to fulfil its lock function, that is to say to retain the card in the horizontal contact and use position in the housing 126, the transversely sliding lock 200 essentially comprises a longitudinally oriented and centrally recessed horizontal upper tab 208, which tab thus defines two portions 154, the function of which is equivalent to that of the lips 154 of the first embodiment but which here are, because of the sliding nature of the lock 200, retractable means for retaining the card in position in the housing 126.

According to a detail (not shown), means for indexing the sliding lock 200 are provided in its two extreme transverse positions. These means consist, for example, of at least one boss or bump formed in the metal of the lock and which is received alternately in one or other of the two holes or recesses in the insulating support. This solution also provides a tactile sensation of the locking or unlocking.

To make it easier to operate the lock 200, the recessed central part is, during manufacture, slightly bent vertically upwards in order to constitute a tongue 210 forming a gripping and operating handle.

When the lock 200 is in its open or unlocked transverse position illustrated in Figure 7, the rear longitudinal edge 155 of the tab 208, and therefore of the lips 154, is located to the right, or slightly set back towards the outside with respect to the edge 144 of the housing 126 so as to be able, as previously by sliding and pivoting about the edge 186, to insert the card C into the housing 126 acting against the sprung arm 190.

When the card has reached its horizontal position in place and bearing against the contacts 132, 134, the user stops applying force on the card, which is pushed so as to be in transverse abutment with its front longitudinal edge 152 bearing against the edge 144 of the housing 126.

In order to ensure that the card C is reliably retained in the housing 126, the user then locks the lock 200, that is to say he pushes it rearwards (from the right to the left with regard to Figure 7) in order to bring it into the position illustrated in Figures 8 and 9 in which the tab 208, with the two lips 154, lies vertically above the housing 126 and therefore above the facing part of the upper face 156 of the card C (see Figure 9), thus locking the card in the same way as in the first embodiment illustrated especially in Figure 6.

In order to remove the card from the connector 110, the user starts, of course, by unlocking the lock 200 by moving it transversely forwards, that is to say from the left to the right with regard to Figure 9, in order to release the tab 208 with the two lips 154 and bring the lock 200 into its position shown especially in Figure 7.

During the unlocking operation, due to the action of the contact blades 132, 134, the card C is raised and leaves the housing so that the user is able to take hold of it by hand.

Overall, the ergonomics of the connector 110, from the standpoint of putting the card C into position and of extracting it, are analogous to that described previously with reference to Figures 1 to 6.

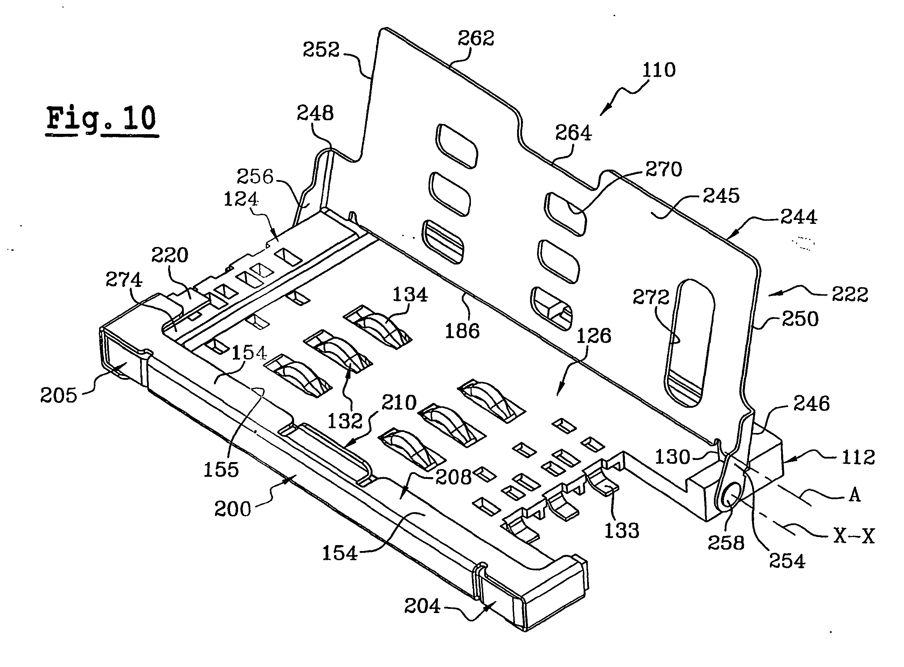

The first invention embodiment illustrated in Figures 10 to 15 will now be described, especially by comparing it with the embodiment previously described

First of all, it will be noted that the use position of the card, in place in the housing 126, has been turned through 180° about a vertical axis, that is to say the chamfer 130 for positioning the card in the correct orientation is now near the right rear corner of the insulating support 112, whereas previously it was near its left front corner.

The two, front and rear, longitudinal edges 146 which form the transverse boundary of the housing 126 in the insulating support 112 are in this case moulded as one piece in the support 112 in the same way as the two transverse edges 140 and 142.

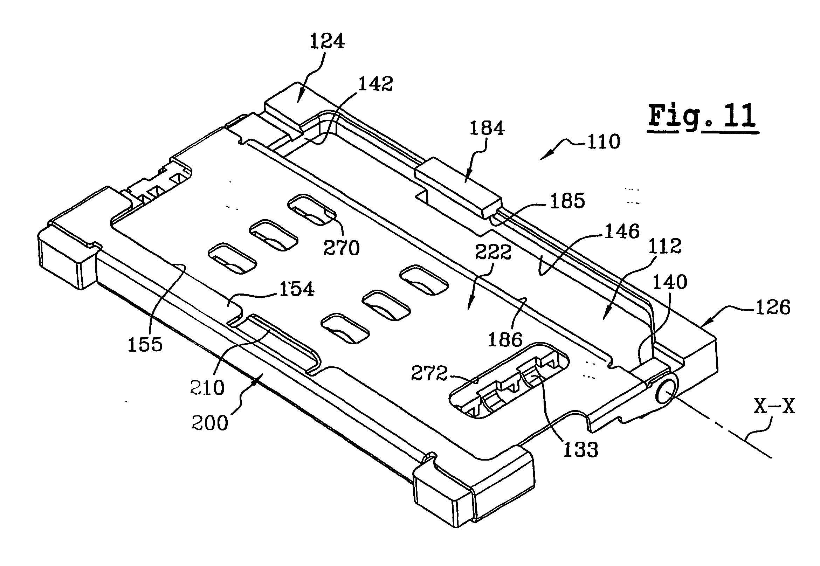

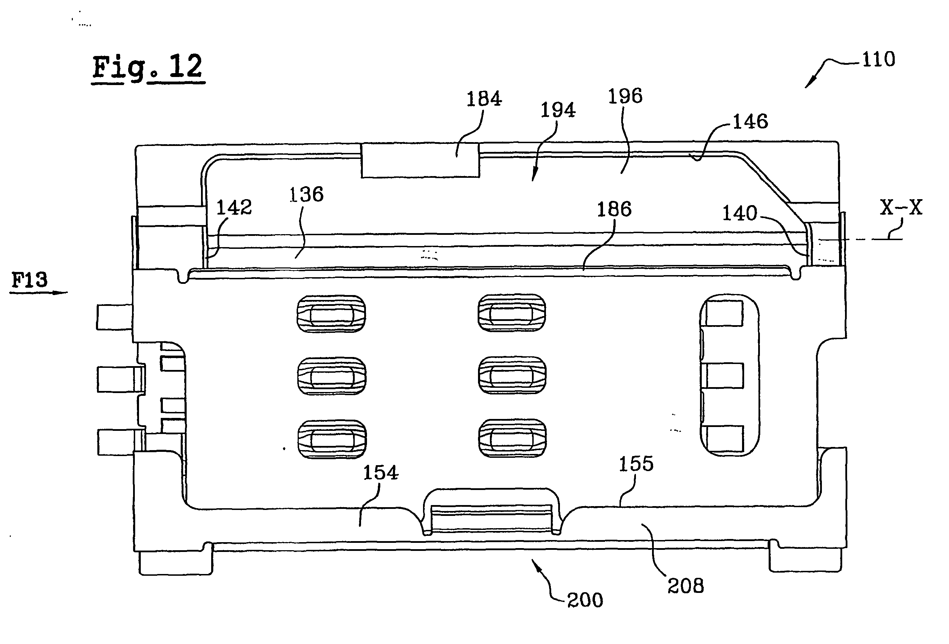

It may also be seen in the figures, and especially in Figures 11 and 12, that the tab for the (vertically upwards) retention of the card C is, here, a tab 184 moulded as one piece with the insulating support 112.

The connector 110 is also fitted with a transverse sliding lock 200, the design of which is basically analogous to that of the lock 200 described previously with reference to the second embodiment, but it does not serve here to lock the card C directly in the contact position in the housing 126 but, as will be explained later, to lock a flap for retaining the card and for closing the housing.

For this purpose, the parts 205 and 206 of the insulating support 112 along which the lock 200 is slideably mounted has a slight overthickness 220 so that the lower face of the lips 154 of the tab 208 lies in a horizontal plane vertically offset upwards with respect to the plane of the upper face 124 of the insulating support 112.

According to the invention embodiment, the connector 110 is fitted with a hinged flap 222.

This flap 222 is a piece made of cut and folded sheet metal which is basically in the form of a rectangular plate 224 which is bounded by two transverse edges, the right edge 246 and the left edge 248, each having an indent 250, 252.

Starting from each of the transverse edges 246, 248, the flap 222 has two vertical tabs 254 and 256 bent downwards through 90°, these tabs being two tabs for hinging the flap 222 so that the latter is basically mounted so as to pivot about a horizontal hinge axis X-X which in this case is a longitudinally oriented axis located in the thickness of the insulating support, the actual mechanical hinge being provided by two bosses 258 and 260 housed in complementary recesses in the insulating support 112.

The hinged flap 222 is also bounded transversely by a front longitudinal edge 262, having a central indent 264 placed longitudinally in line with the tongue 210 of the tab 208 of the lock 200, and by a rear longitudinal edge 186 which, from the functional standpoint and as will be explained later, fulfils the same function as the edge 186 described previously with reference to the first two embodiments and which belong to the fixed tab 184 of the attached element 150.

The rear longitudinal edge constituting the edge 186 has a slightly curved profile, convex towards the inside, so as to make it easier for it to engage with the upper face of the card C, for which it constitutes the pivoting axis A when the card is being put into position in the housing 126.

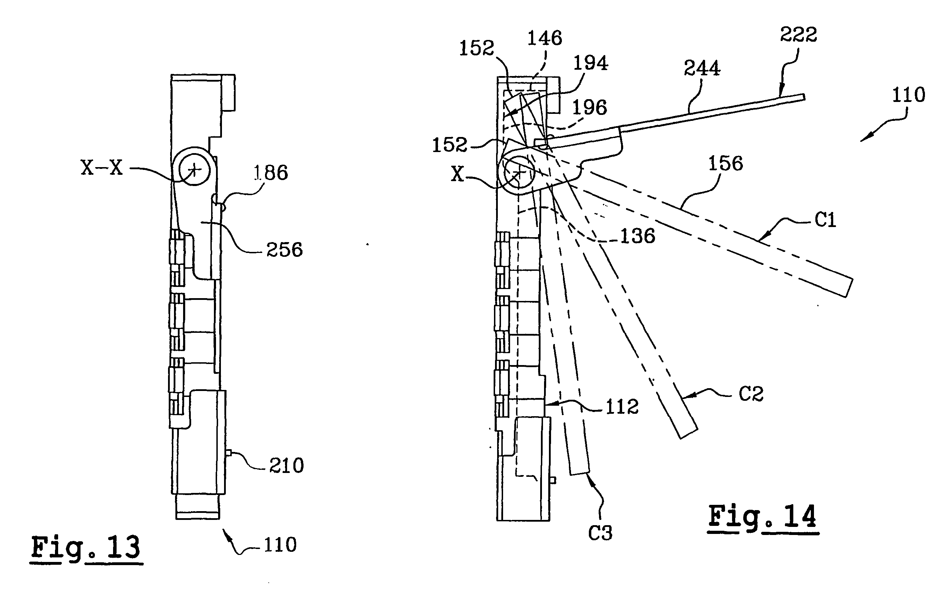

In the open position of the flap 222, the design of these hinging means is such that it is held in an approximately vertical orientation, as may be seen in Figures 10 and 14, making an angle of about 100° with respect to the horizontal plane of the insulating support 112.

As in the case of the firstly described embodiment, and as is shown in detail in Figures 12 to 14, the bottom 136 of the housing 126 has, in its rear part, a recess 194, the bottom 196 of which is offset vertically downwards with respect to the bottom 136.

The flap 222 has, in its central part, cut-outs 270 allowing access to the ends 134 of the contact blades 132, especially for the purpose of carrying out electrical test operations in the absence of a card. Similarly, a cut-out 272 allows access to the right connection leads 134 for the reflow soldering operations.

In the closed position of the flap 222, and as may be seen especially in Figure 13, it lies in a horizontal plane with respect to the lower face 245 of the plate 244, which bears vertically against the facing parts 274 belonging to the plane of the horizontal plane upper face 124 of the insulating support 112.

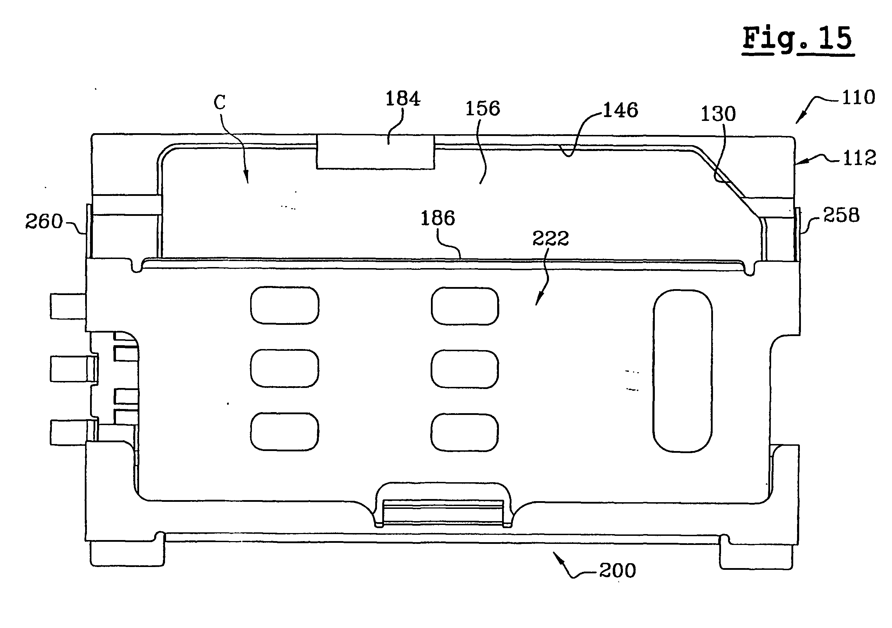

In this closed horizontal position of the flap 222, and in the presence of the card C, as is illustrated in Figure 15, the lower face 245 thus constitutes a face for the vertically upward retention of the card C in the contact or use position in the housing 126.

The fact of having an almost complete face of the flap which engages with the facing portions of the upper face 156 of the card, apart from ensuring that the card is held very well in position, with good parallelism, with respect to the insulating support, prevents any risk of the card deforming when it is exposed to high thermal stress, especially when the electronic apparatus which is fitted with the connector with a card is subjected to high temperatures, for example when it is a mobile telephone left exposed to the sun.

Apart from this function of retaining the card in the use position, the rear longitudinal edge 186 of the hinged flap 222 constitutes an edge forming the pivoting axis A for the card when positioning the latter, as was explained previously in the case of the first two embodiments.

The fact that the flap 222 is mounted so as to be hinged with respect to the insulating support 112 makes it possible, when the flap is open, for the edge 186 to be offset vertically upwards with respect to the bottom of the housing so as to make it easier to position the card.

If the edge 186 is part of the hinged flap, we thus have an edge which moves with the flap and which, when the flap is open for putting the card into position or for extracting it, makes it possible to increase the amount of overhang of the part of the apparatus or equipment located above the card in the working position. This amount of overhang is much greater cases in which there is only a simple rim moulded with the insulating support.

How the card is put into position is illustrated especially in Figure 14.

The card is firstly put in its position C1, shown in outline in which its rear longitudinal edge, which here is the edge 152, bears against the bottom 196 of the recess 194 while the upper face 156 bears against the edge 186.

The insertion and positioning movement continues by making the card slide and pivot about the edge 186 until it firstly reaches the intermediate position C2 in which the upper face is still in contact with the edge 186 and in which the edge 152 of the card bears against the edge 146 of the housing 126 and against the bottom 196 of the recess 194.

Finally, the user gradually tilts the card until it is entirely in the housing 126, by passing especially through another, intermediate position C3 illustrated also in outline in Figure 14.

In this position C3, the card is held slightly inclined with respect to the bottom of the housing 126 because of the action of the spoons 134 of the blades 132 on the lower face of the card.

In order for the user to put the card fully in position in the housing 126, he then closes the flap 222 by making it pivot, clockwise with regard to Figure 14, so as to bring it into its horizontal closure position illustrated in Figure 13 in which the corresponding parts of the lower face 245 bear on the corresponding parts 274 of the upper face 124 of the insulating support 112.

Next, the user has only to lock the flap 222 by acting on the lock 200, which then locks the flap 222 in the closed horizontal position as illustrated in Figures 11, 12, 13 and 15.

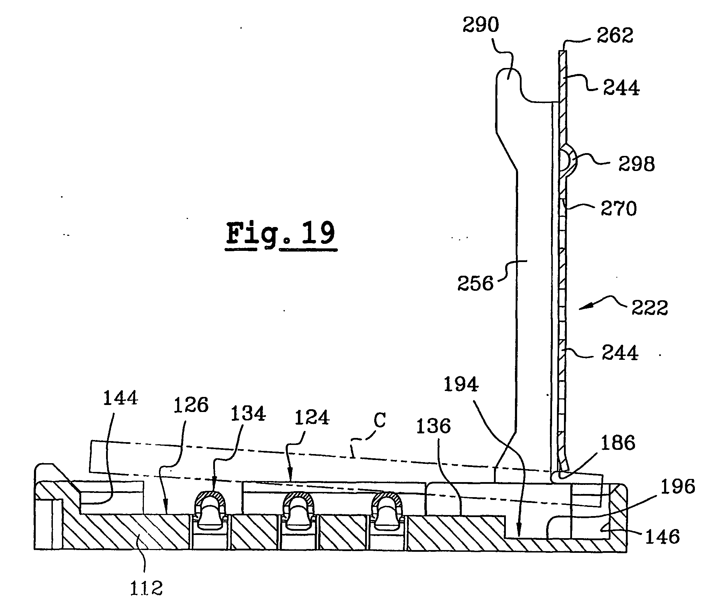

Also shown in Figure 19, in outline, is the stable position occupied by the card C after the flap has been completely opened and in which it makes an angle of about 8° with the horizontal. This position, in which the card is partially removed from the housing, allows it to be gripped by the user.

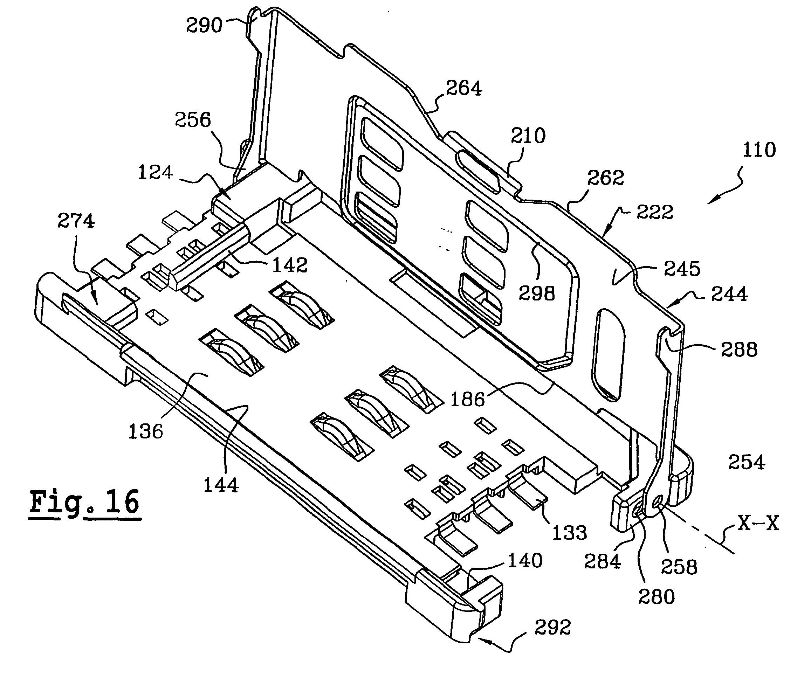

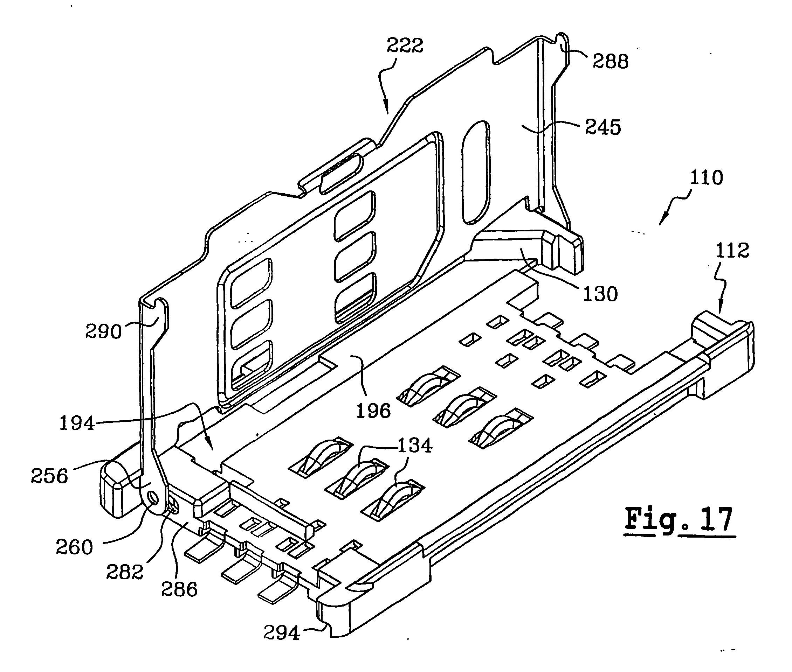

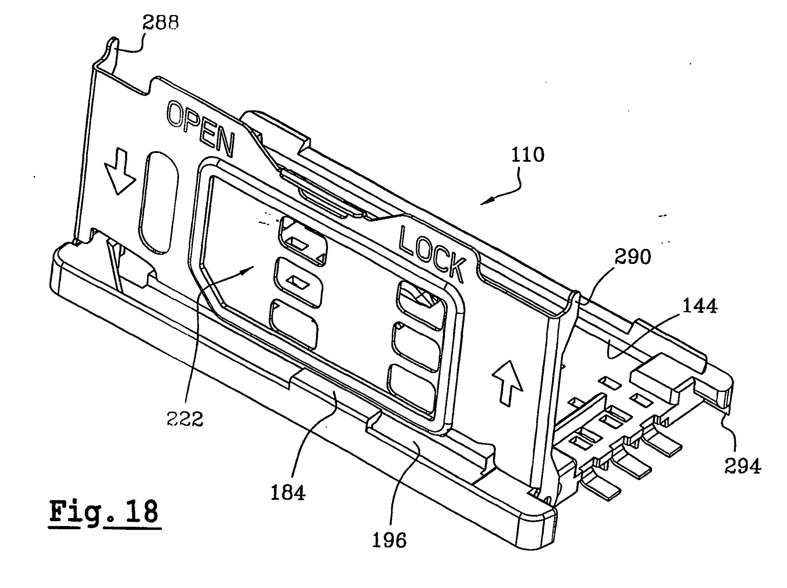

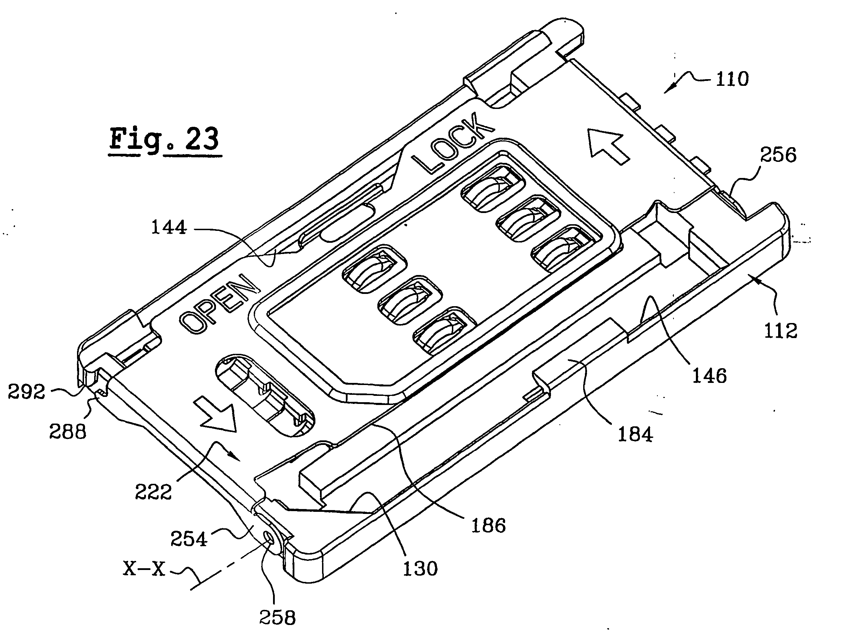

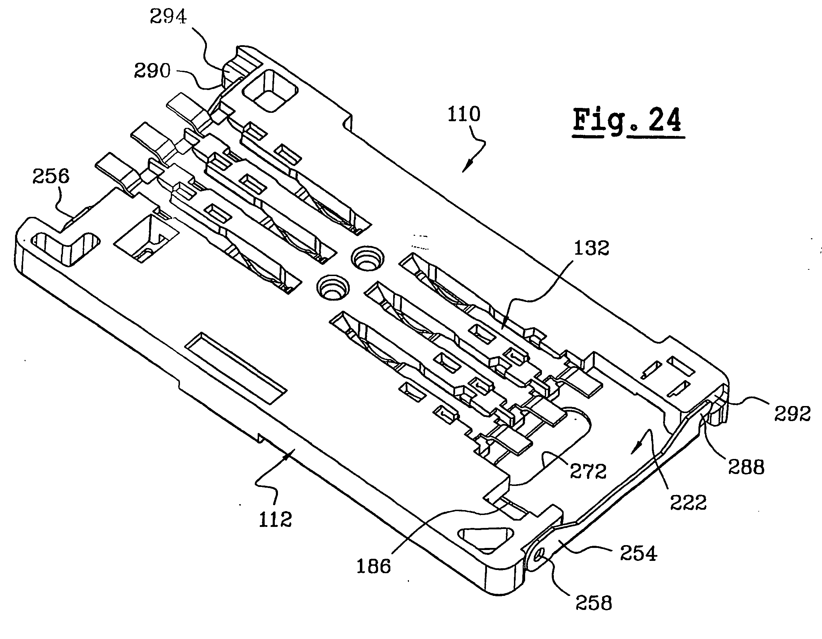

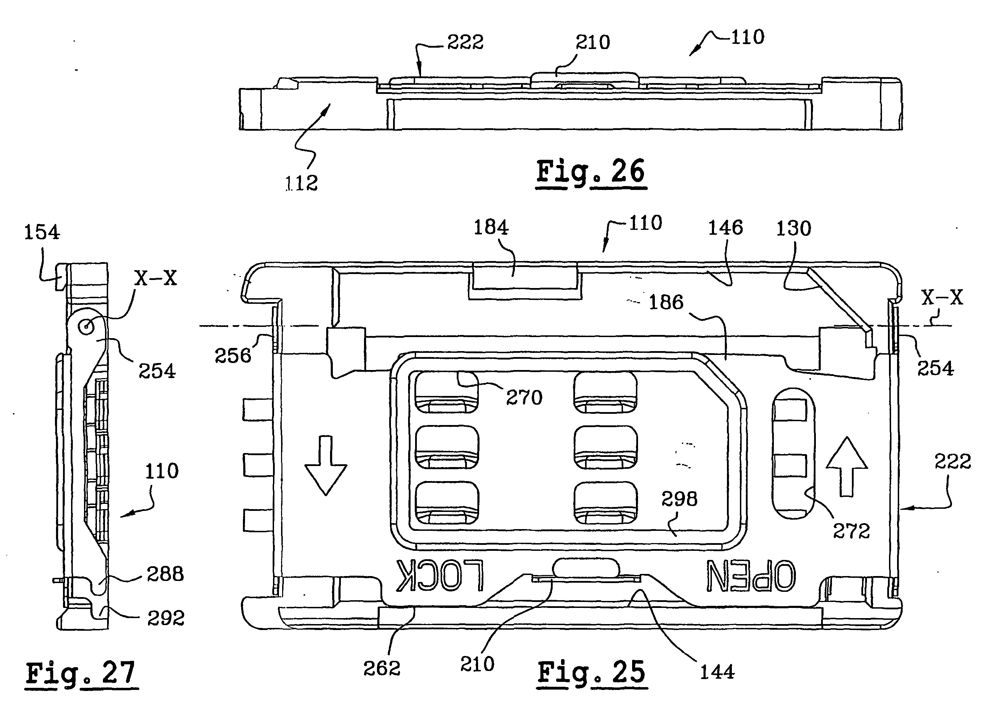

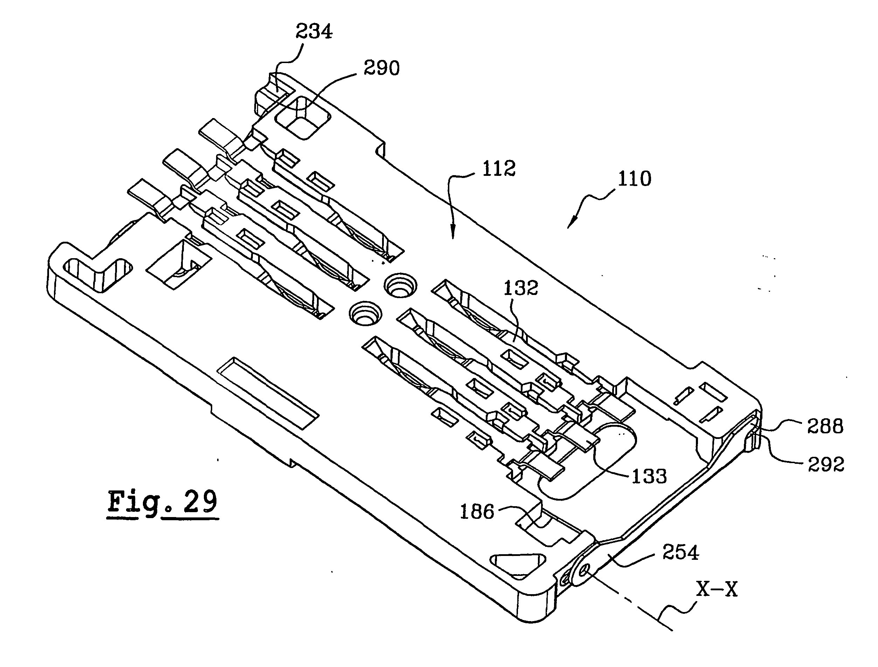

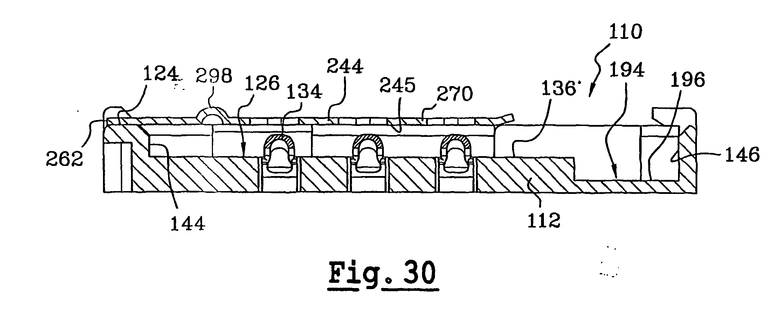

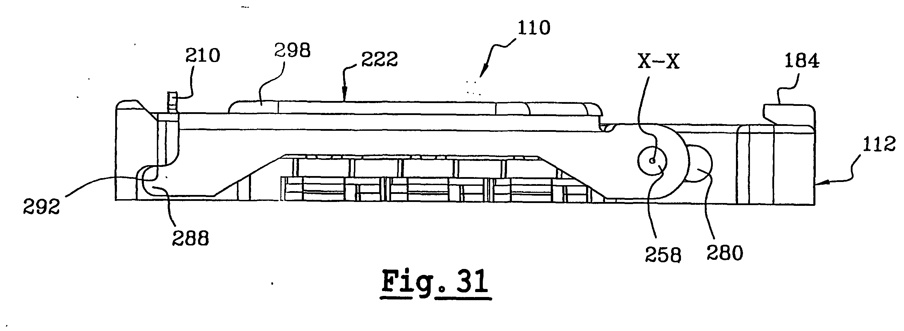

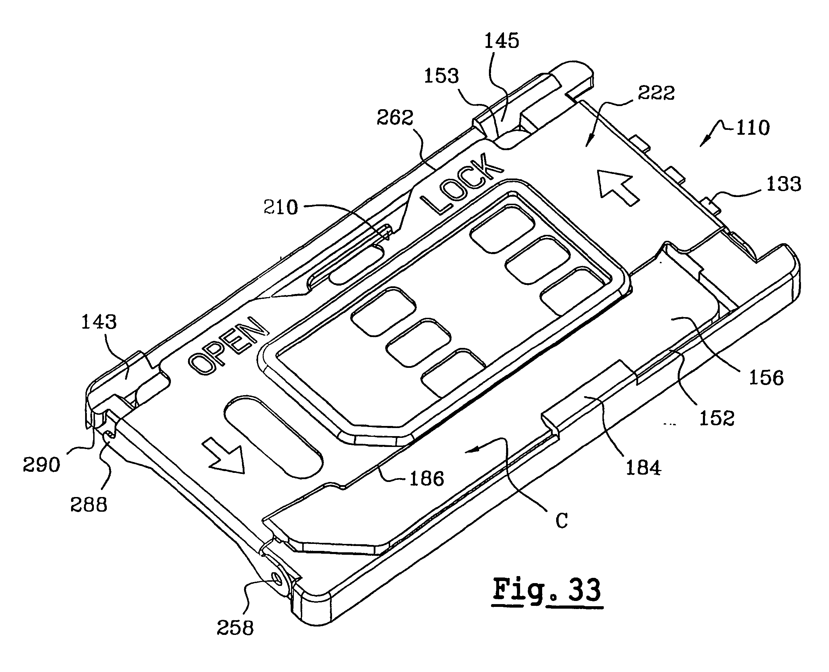

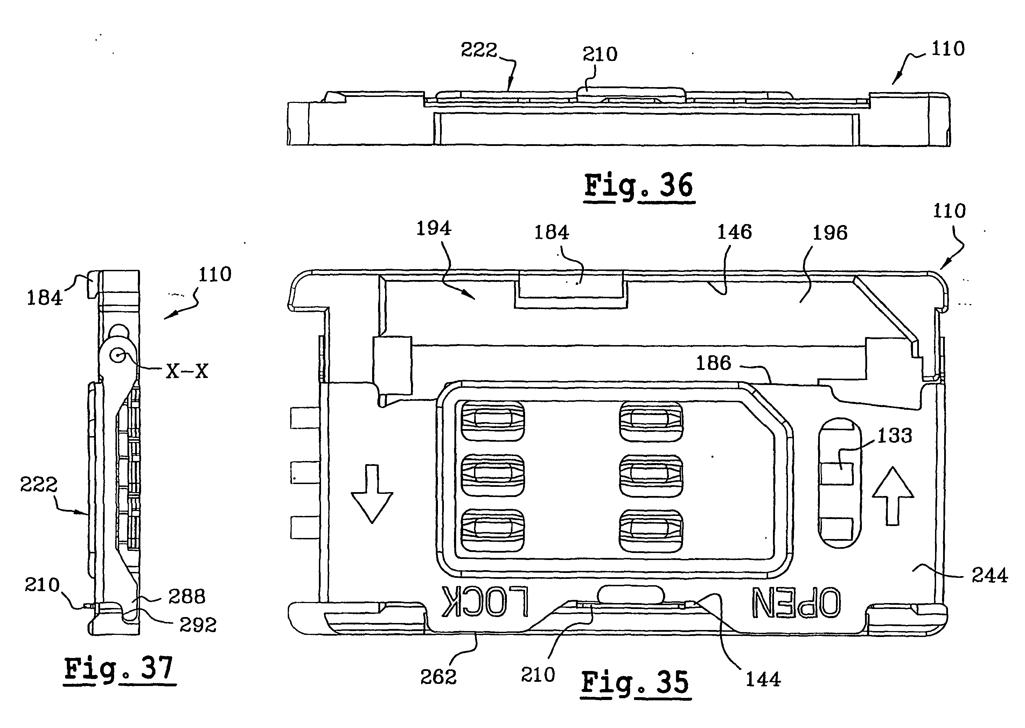

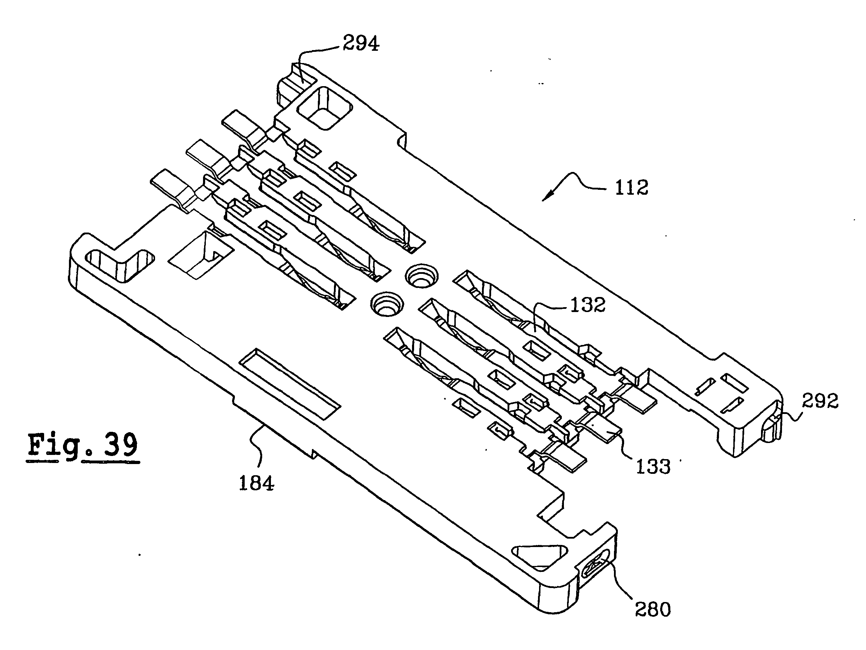

The second invention embodiment illustrated in Figures 16 to 39 will now be described by comparing it with the first embodiment that has just been described with reference to Figures 10 to 15.

This second embodiment essentially differs from the previous one by the nature of the locking means in the closed position of the hinged flap 22.

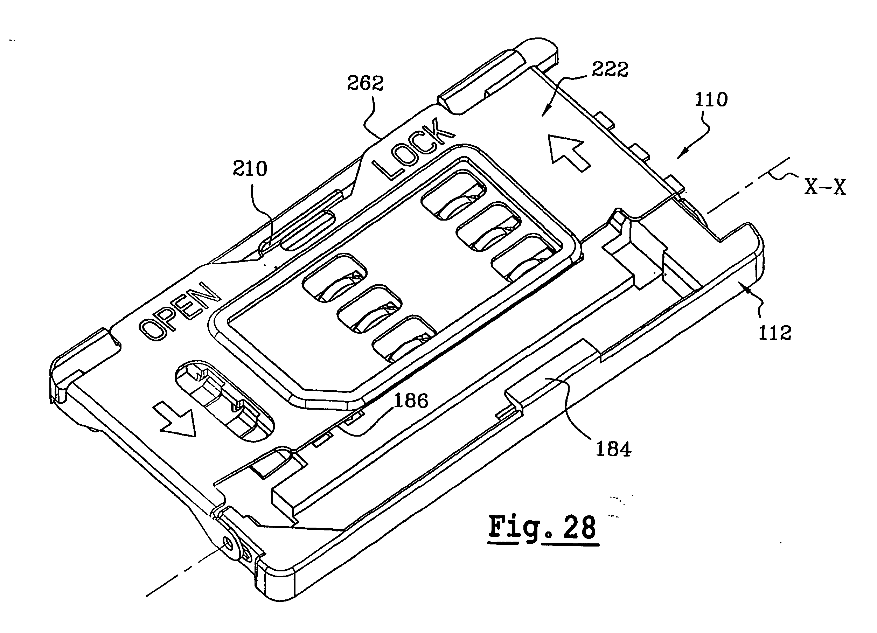

This is because, in this second embodiment, these locking means no longer make use of an independent lock, complementary to the lock 200, but consist partly of the flap 222 itself. For this purpose, the flap 222 is mounted so as to move transversely in a horizontal plane, especially when it is in the closed horizontal position, that is to say its hinge axis X-X may be moved transversely between an unlocked rear position which is shown especially in Figures 16, 23 and 25 and a locked front position which is shown especially in Figures 28, 31 and 35.

For this purpose, each boss 258, 260 belonging to the corresponding hinge tab 254, 256 may be housed, in the rear position, in two facing holes or housings formed in the insulating support and, symmetrically, each boss may be housed, in the front or locked position of the flap 222, in another hole in the insulating support.

The two holes defining each favoured position of the boss 258, 260 constitute the ends of an opening or slot 280, 282 formed for this purpose in a transverse lateral face 284, 286 of the insulating support 112.

In order to fulfil the locking function, that is to say prevent the flap 222 in the locked position from being able to be opened vertically upwards and therefore rotate about its axis X-X, the hinge tabs 254 and 256 are extended transversely towards the front longitudinal edge 222 and they each have a hook 288, 290 which, in the locked position, is housed in a complementary notch 292, 294 in the insulating support, as is especially illustrated in Figures 28, 29 and 31.

In order to make it easier for the hinged flap 242 to be handled, in order to make it slide in a horizontal plane between its two extreme positions - the unlocked rear position and the locked front position - its front longitudinal edge 262 has an indent 264 making it possible, when producing it, to form a handling tongue 210 for the locking operation.

In order to make the closure flap 222 stiffer, it also has a longitudinal reinforcing rib 298. According to an alternative embodiment (not shown), it is possible to give the stamped rib 298 a profile matching the profile of the card, with its chamfer for correctly orienting it, so as to indicate to the user the direction in which the card is to be positioned in the connector.

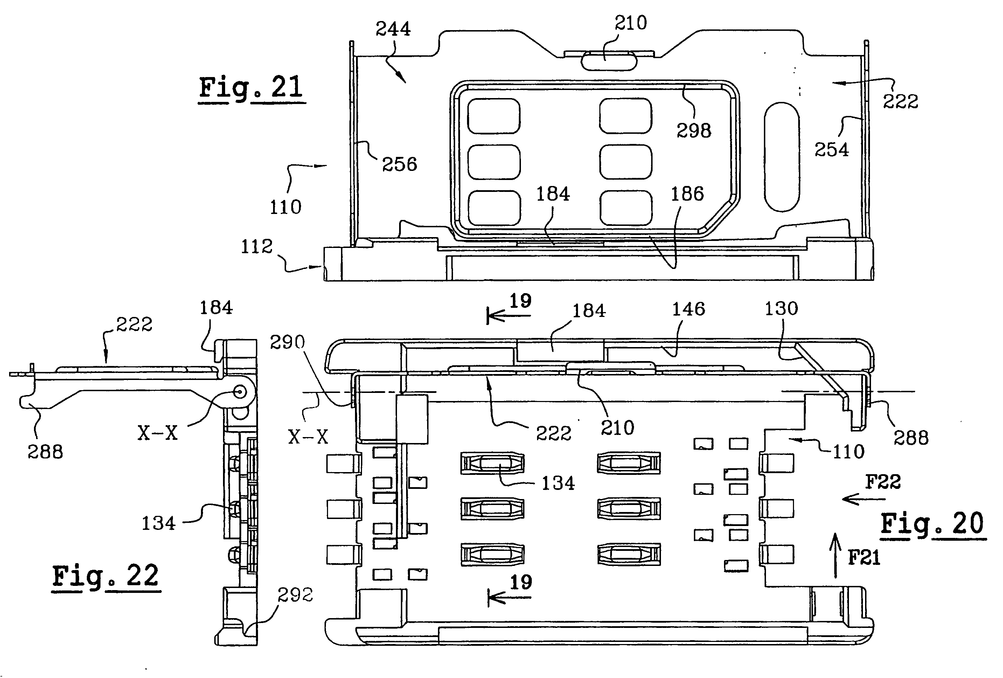

As may be seen especially in Figures 19 and 22, the shape of the flap 222 with its means for hinging with respect to the insulating support 112 is such that its open position is a position in which it lies vertically, making an angle of approximately 90° with respect to the horizontal plane of the insulating support.

Putting the card in position in its housing 126 and closing the flap 222 are basically performed in the same way as that described with reference to the third embodiment.

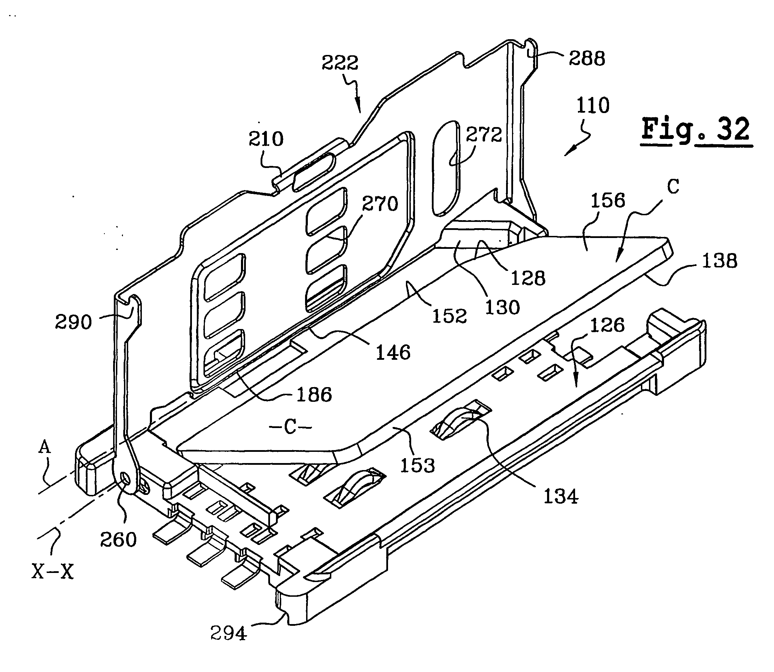

As may especially seen in Figure 32, the card is basically inserted in an inclined manner with respect to the horizontal and to the vertical, and then it is slid towards the rear longitudinal edge 146 of the housing 126.

During this positioning movement, the upper face 156 of the card C comes into contact with the edge 186 of the hinged flap 222 which is in the open vertical position as shown in Figure 32.

As soon as the card is in contact with the edge 186, the remaining movements for completing the positioning operation are identical to those described above, especially by combining a pivoting and sliding movement about the pivoting axis A physically embodied by the edge 186 when the flap 222, also called a cap, is in its open position.

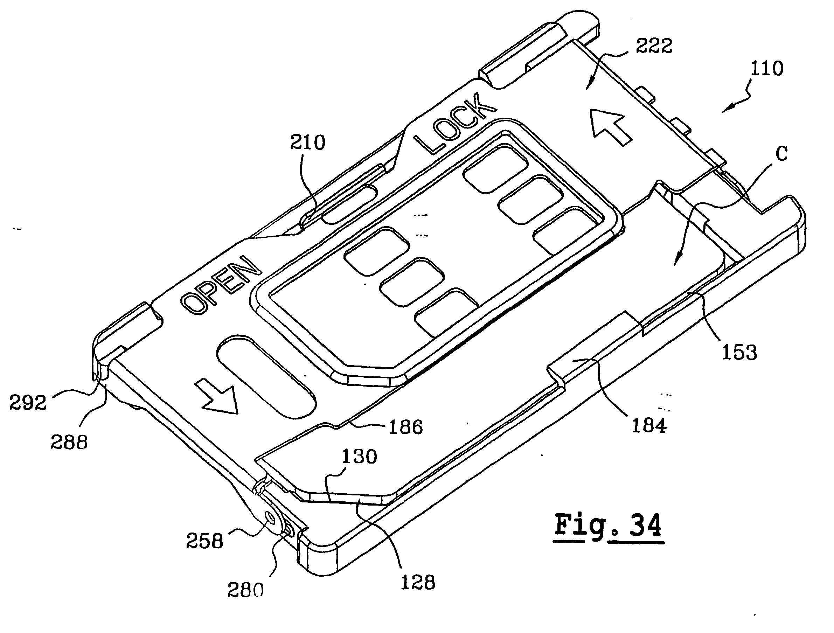

The flap 222 is closed, as previously, by rotating it about the axis X-X and it is locked by acting on the tongue 210 so as to make the hooks 288 and 290 engage in the complementary notches 292 and 294, thus ending up in the position illustrated especially in Figures 34 to 37.

Putting the card into position in the housing 126 is, in addition, facilitated by the fact that, as may be seen in the figures, all the edges which form the boundary of the housing 126 in the insulating body of the support are chamfered in the upper face.

Furthermore, with regard to the edge 144, apart from the chamfer that has just been mentioned and which extends over nine tenths of its length, two 45° ramps are provided which extend the chamfer and are made at the two longitudinal ends.

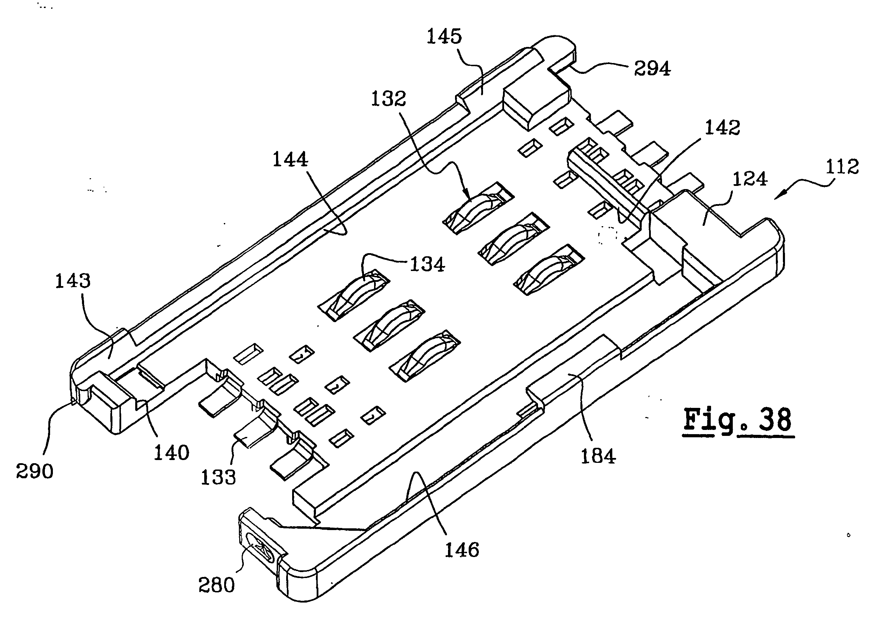

These two ramps 143 and 145 (see for example Figure 38) make it possible to recall the possible offsets of the card at the end of closure of the flap and terminate the guiding of the card in the housing 126, the dimensions of which are, moreover, very similar to those of the card.

The second embodiment represents basically a simplification over the embodiment described in the figures 6-9 in so far as the connector now has only two main components, i.e. the insulating support 112 and the hinged metal flap 222 attached so as to be hinged to the fixed insulating support 112.

The closure flap 222 produced in the form of a metal plate, as in the first embodiment, thus constitutes an electromagnet screening means particularly favourable to proper operation of the electronic apparatus fitted with the connector 110.

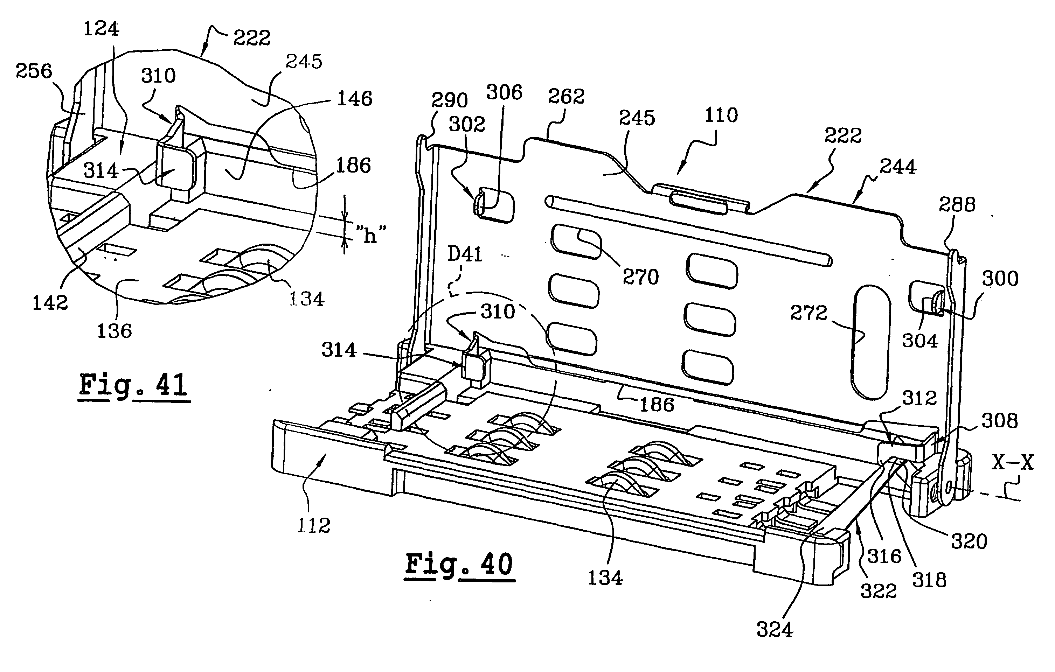

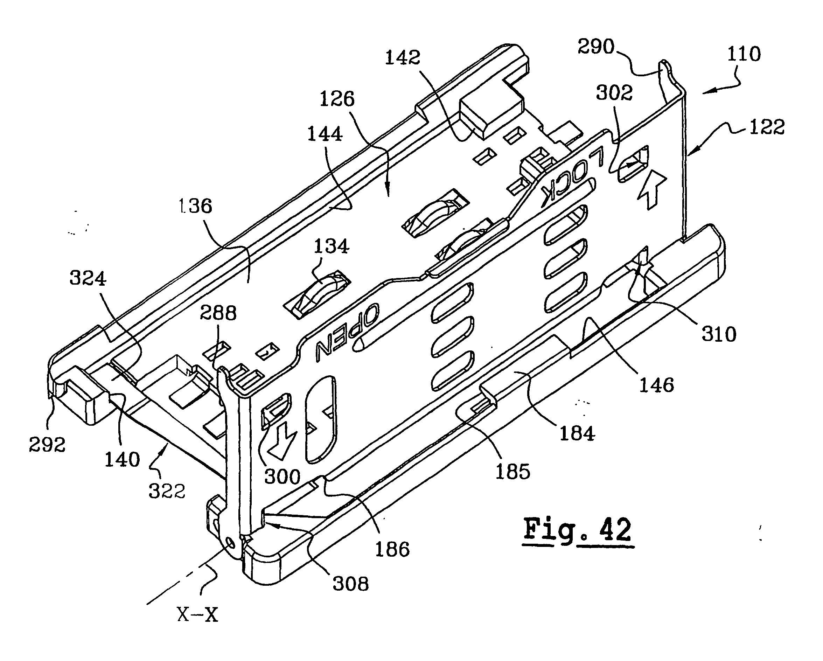

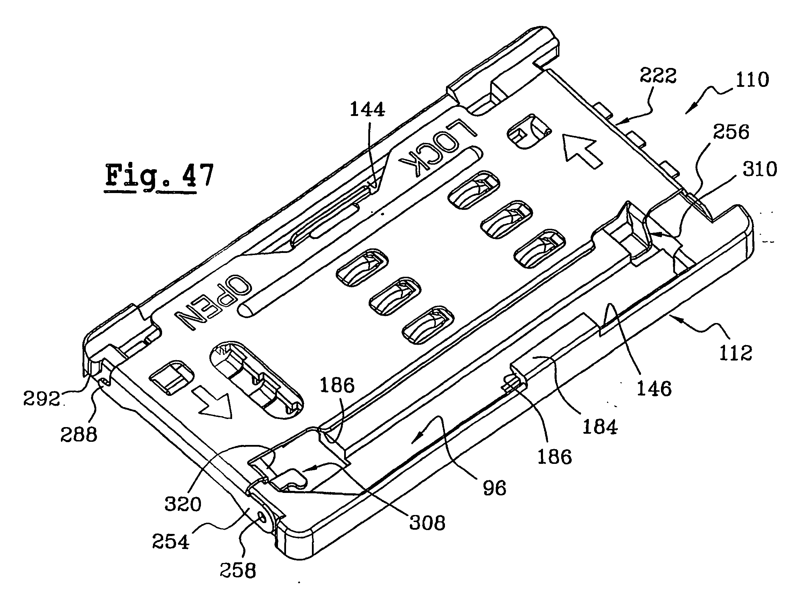

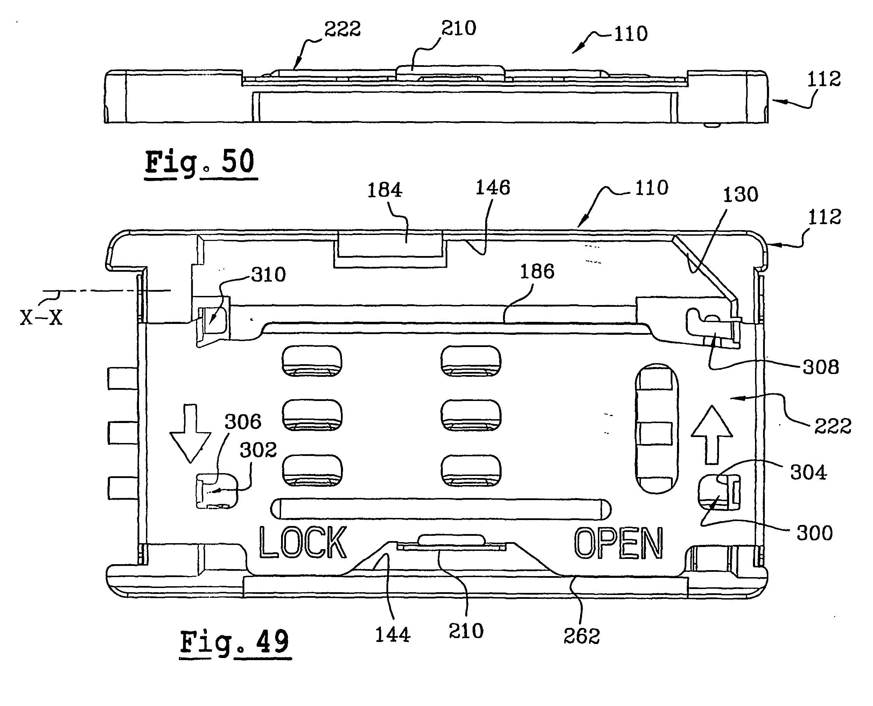

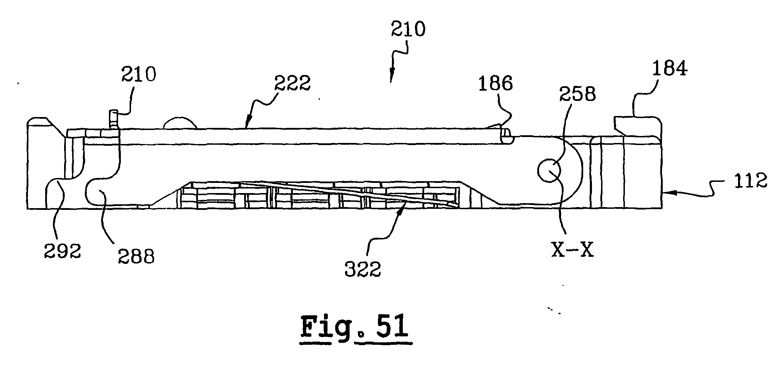

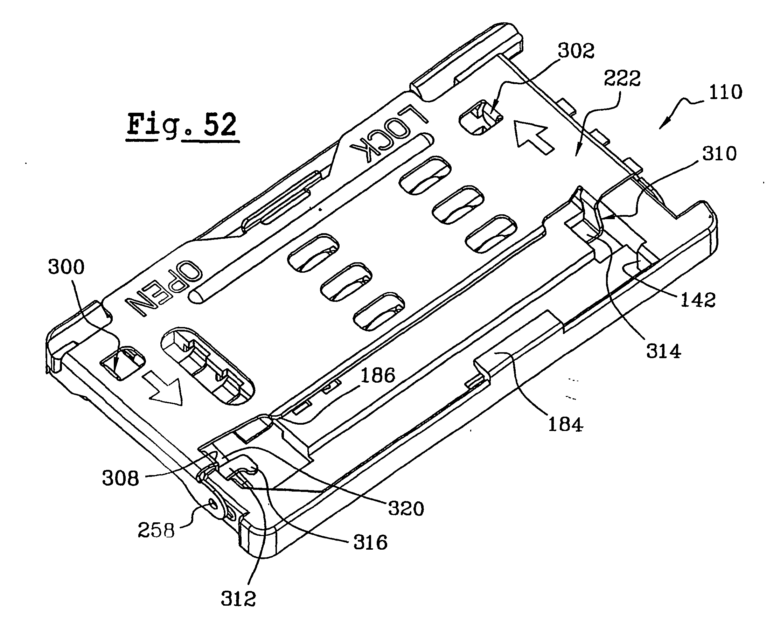

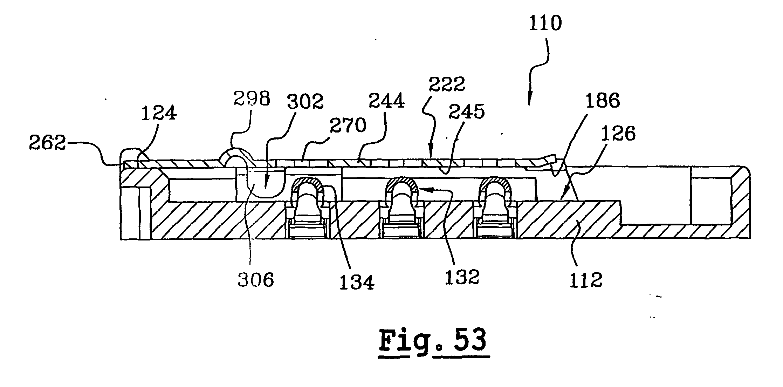

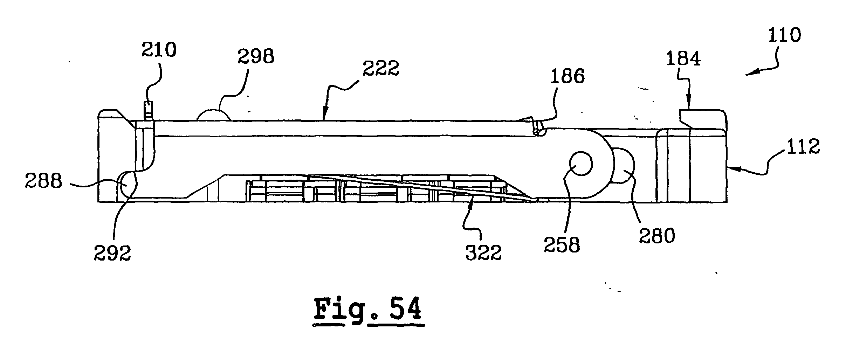

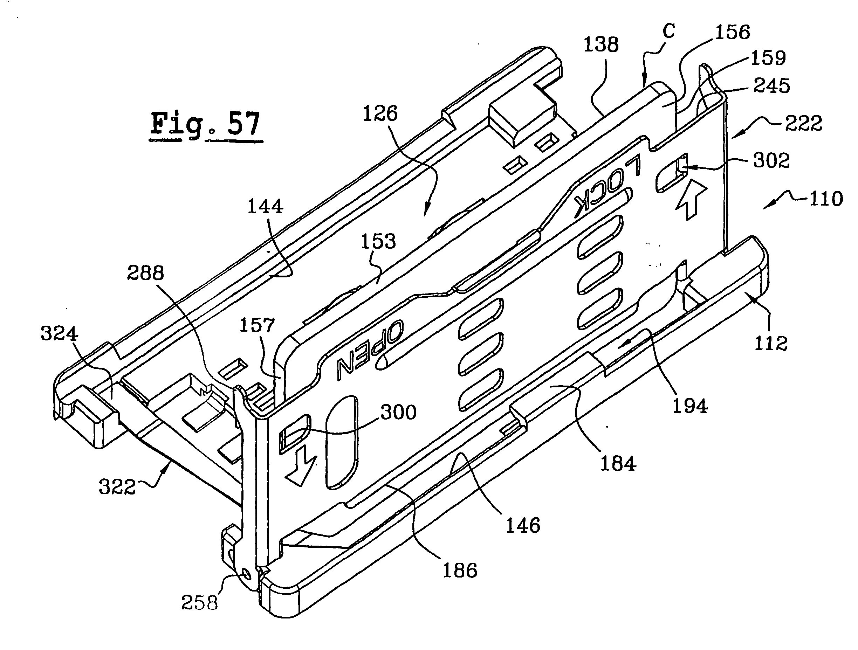

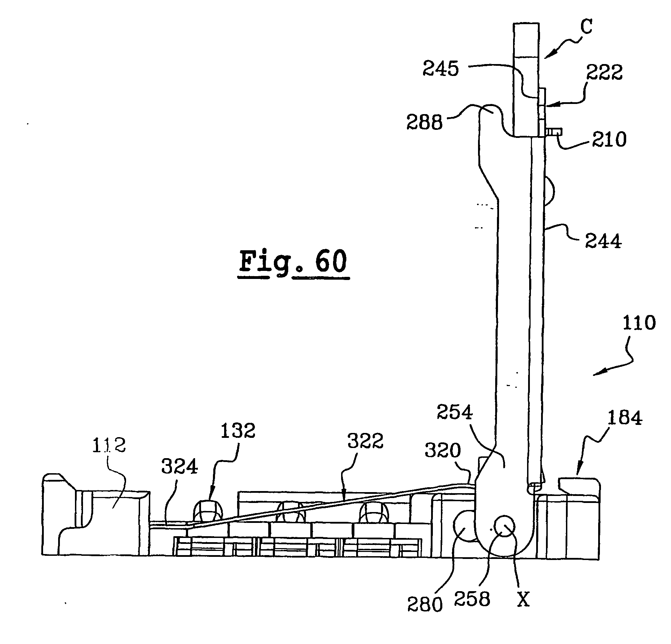

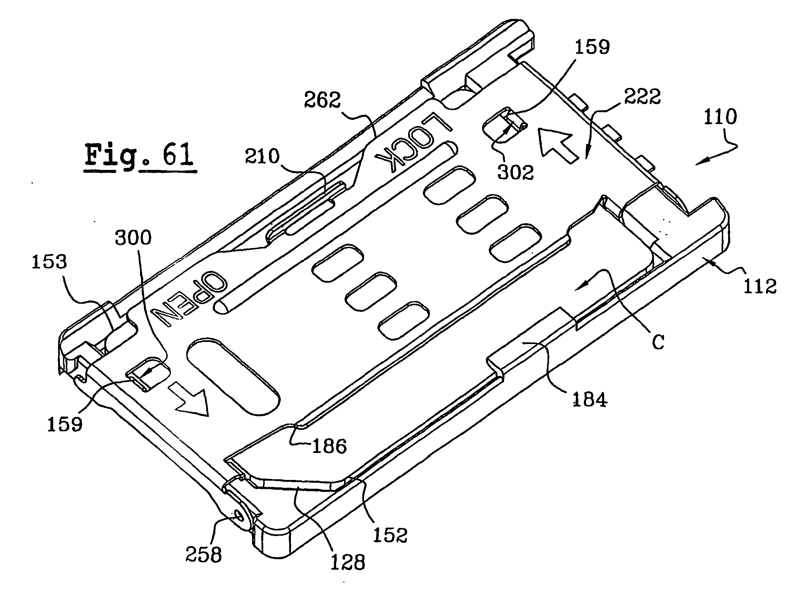

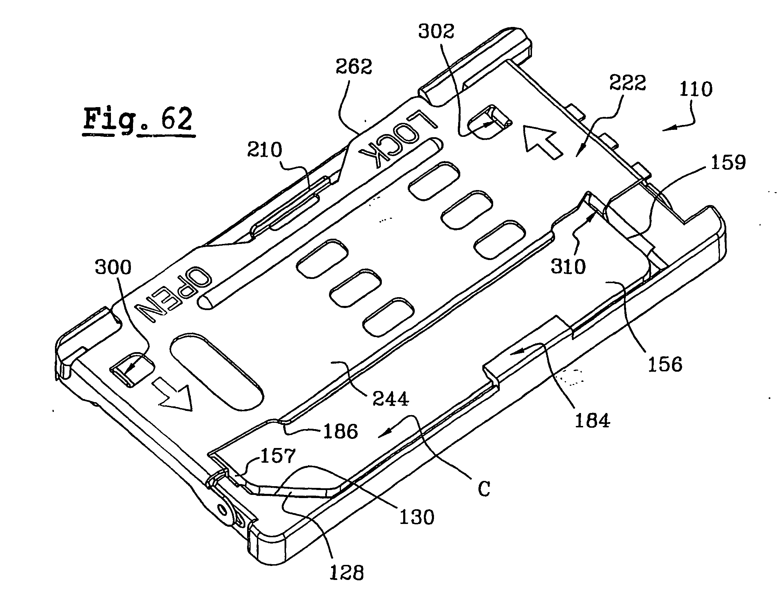

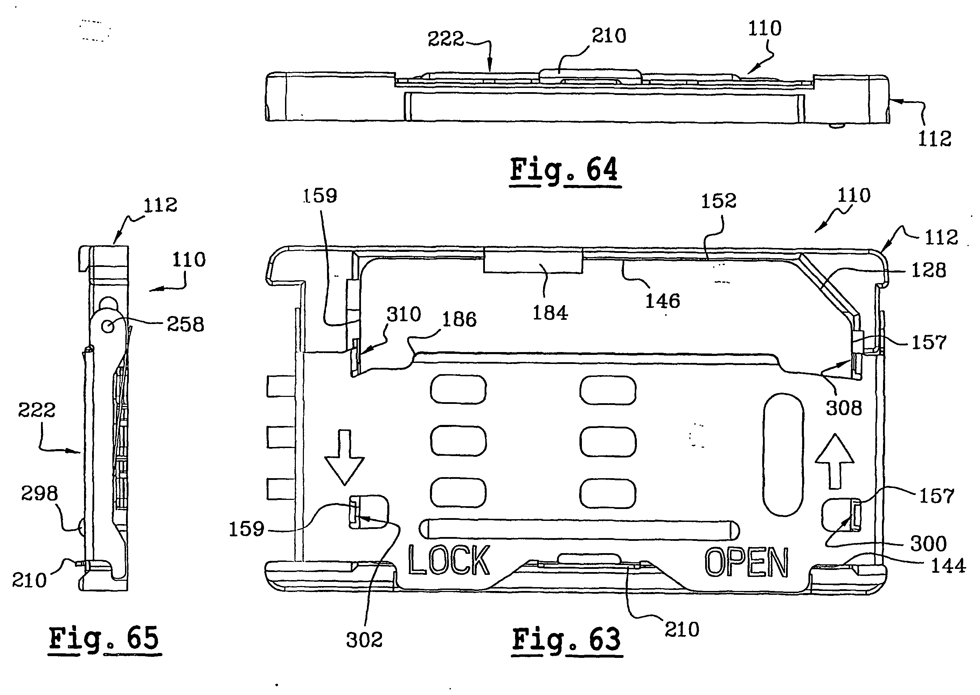

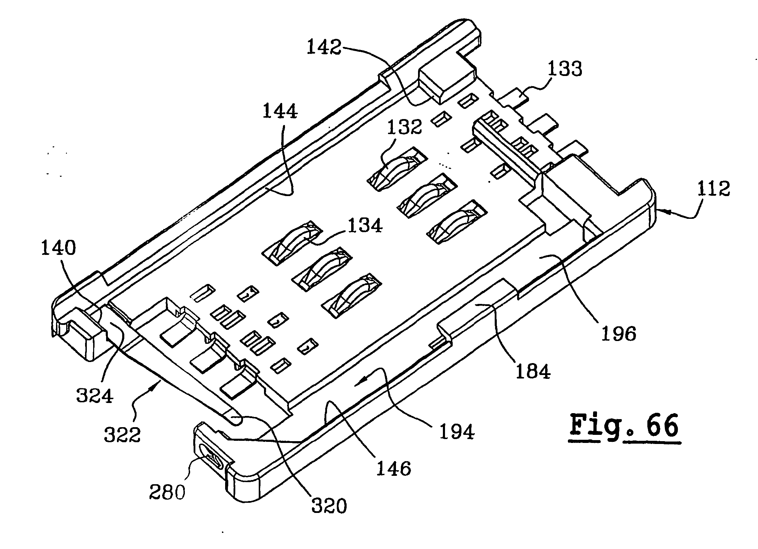

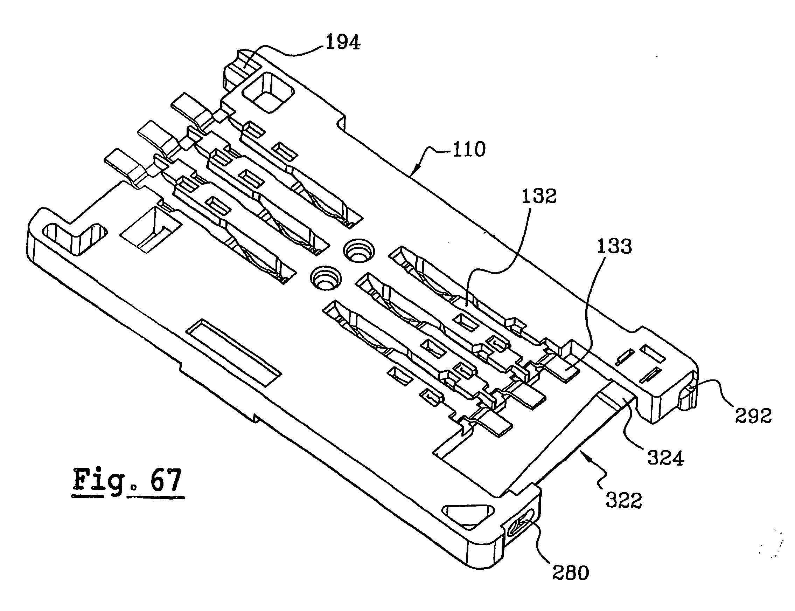

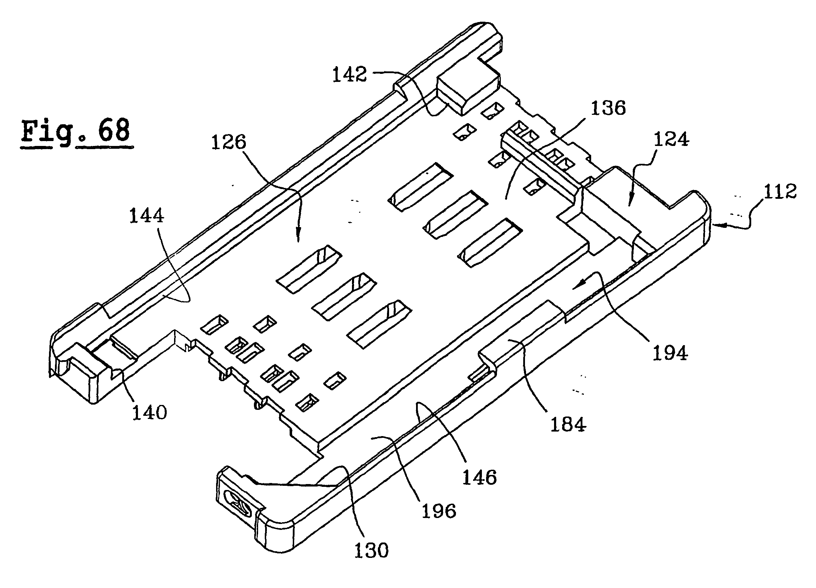

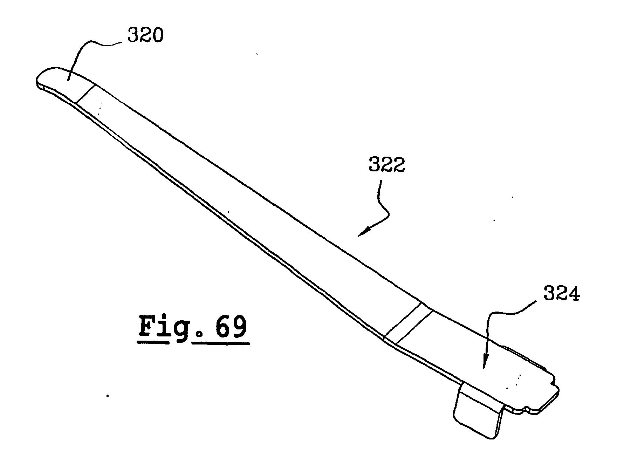

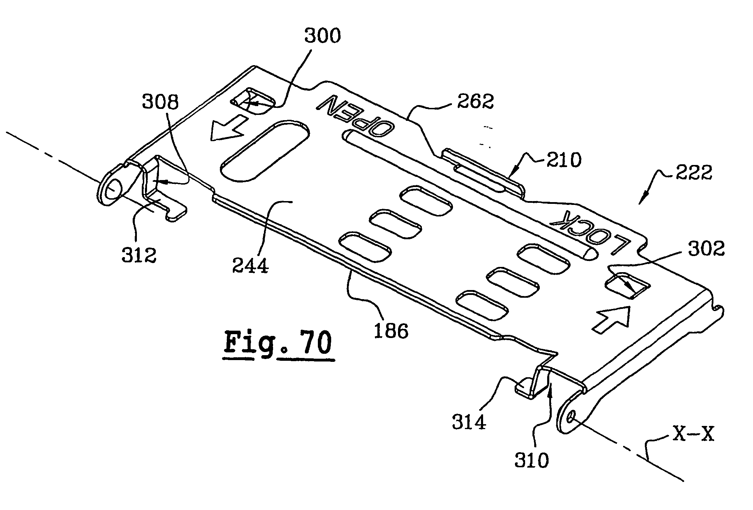

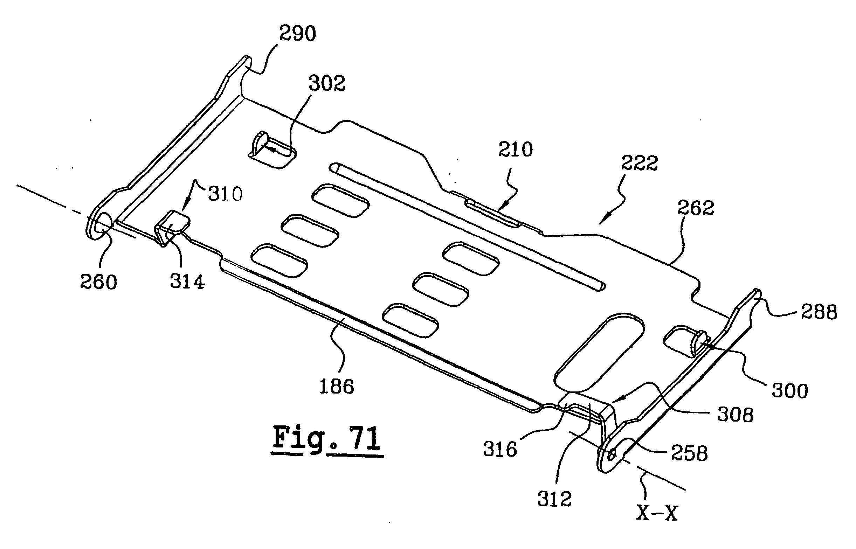

The third embodiment illustrated in Figures 40 to 79 will now be described by comparing it with the second embodiment that has just been described.

Basically, the overall structure of the closure flap and its means for locking it in the closed position with respect to the insulating support 112 are identical to those described and illustrated within the context of the second embodiment.

The third embodiment differs, on the one hand, in that the closure flap or cap 222 has means for partially and temporarily holding the card C and, on the other hand, in that elastic means are provided for automatically returning the closure flap 222 to its open vertical position.

The means for holding the card C with respect to the flap 222, and therefore indirectly with respect to the insulating support 112, are produced, by cutting and folding, as one piece with the flap 222.

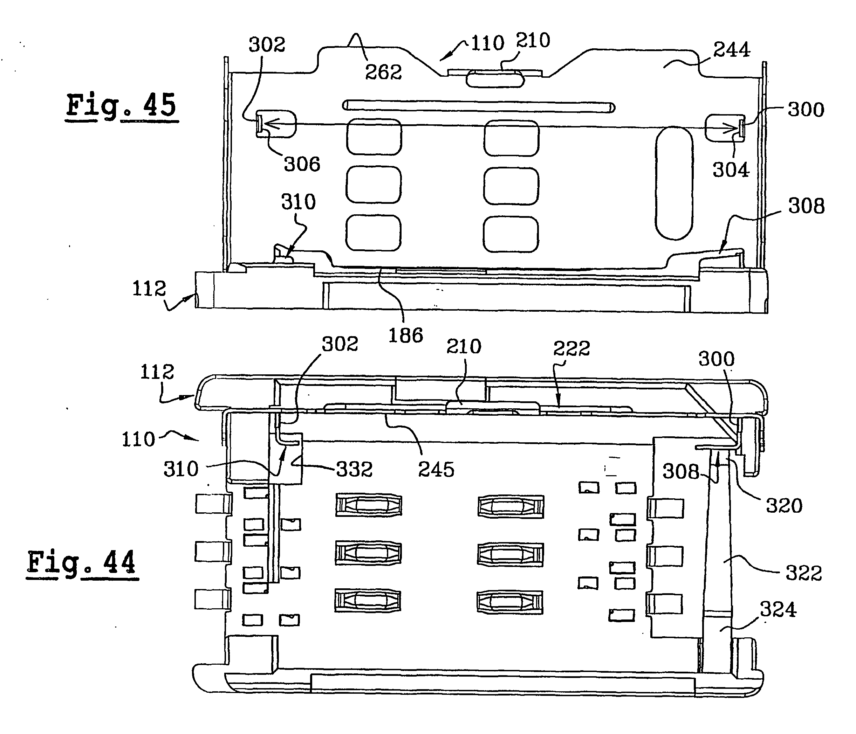

They firstly consist of two upper lateral guiding tabs 300 and 302 which extend towards the inside of the connector, perpendicular to the plane of the plate 244, so as to define two guiding faces 304 and 306 which lie in vertical planes, facing each other and spaced apart longitudinally by a length " L" which is slightly longer than the card C (see Figure 45).

When the closure flap 222 is in the open or vertical position, the guiding tabs 300 and 302 constitute upper tabs, that is to say they are located near the front longitudinal edge 262 which then forms an upper edge of the flap.

Similarly, two lower guiding tabs 308 and 310 are provided, these being made near the longitudinal lower edge 186 and also being separated by the distance " L".

Each lower tab 308, 310 is bent through 90° and is thus extended by a longitudinal tab 312, 314 for retaining the lower part of the card, each of which lies in a plane parallel to the plane of the plate 244 of the flap 222, being spaced apart vertically towards the inside of the connector with respect to the internal or lower face 245.

The right tab 312 is also extended, vertically downwards with regard to Figure 40, by a lip 316 and its lower longitudinal edge 318 is designed to engage with that portion of the upper face which faces the free end 320 of the return spring 322.

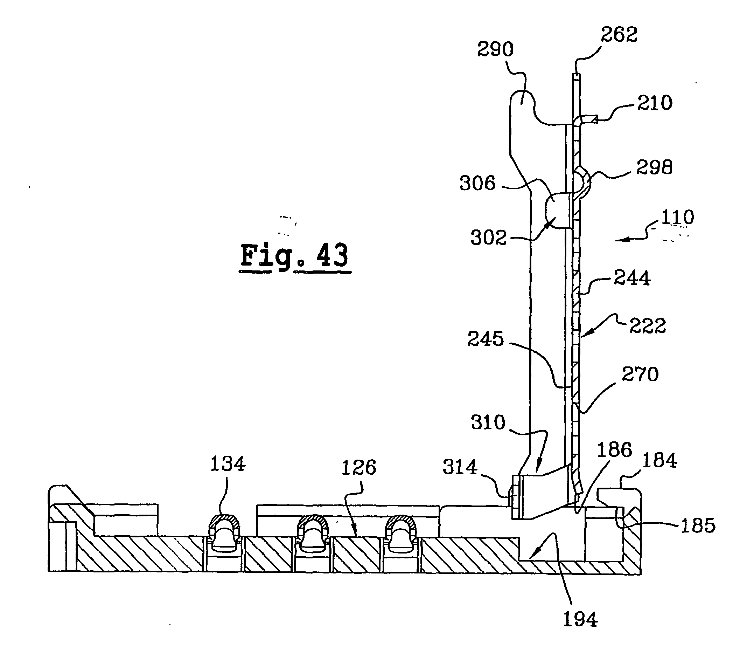

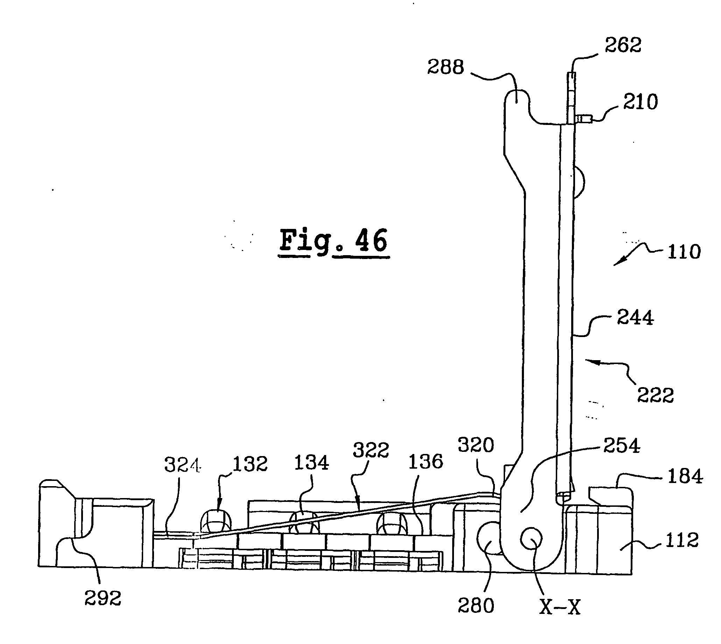

The spring 322 is a piece attached to the insulating support and is basically in the form of a flexing beam made of cut and bent sheet metal, the front transverse end 324 of which is set into the insulating support and the rear free transverse end 320 of which acts on the tab 312, with its lip 316, so as to elastically press the tab 312 permanently upwards, that is to say to make the hinge flap 222 pivot about its axis X-X clockwise with regard to Figures 43 and 46, for example.

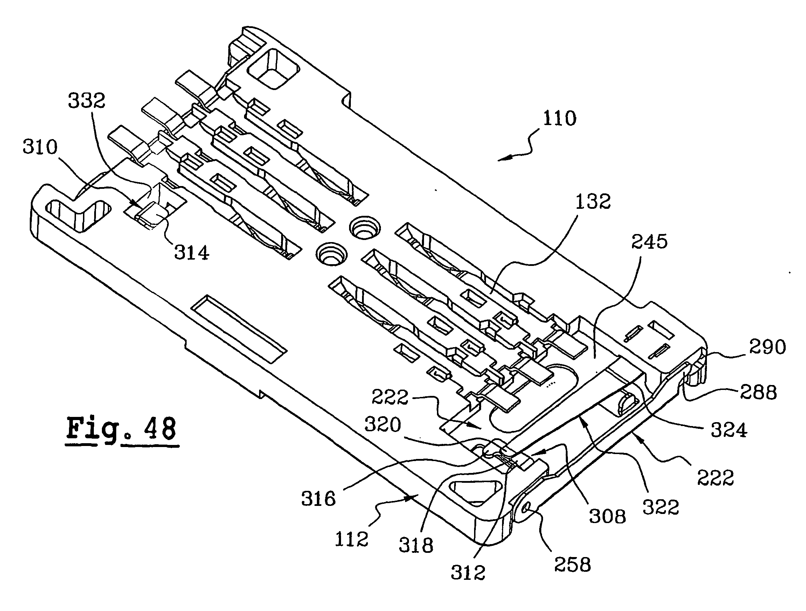

When the flap is in the closed or almost closed horizontal position, it is the face, then oriented horizontally downwards, of the retaining tab 312 which engages with the free end 320 of the spring 322 (see Figure 48).

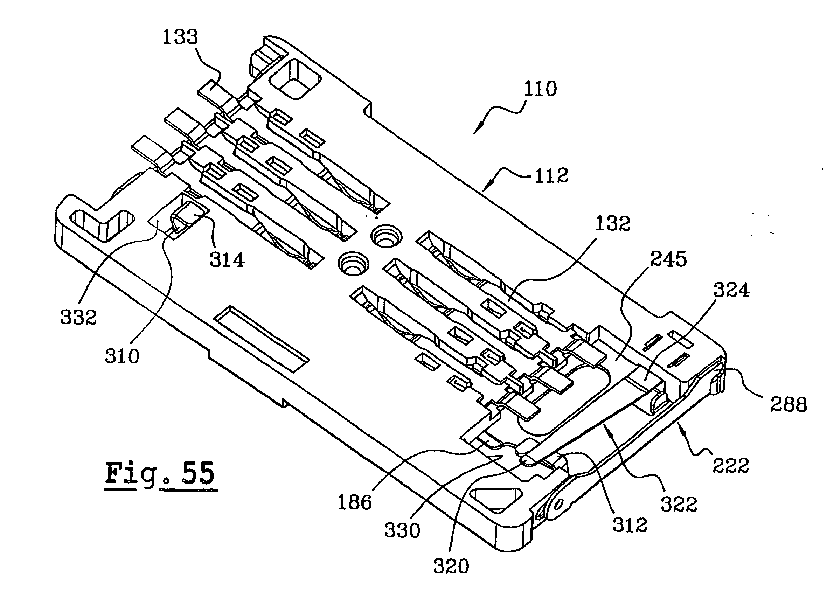

In order to allow " passage" -for the bent-over tabs 308 and 310 when closing the flap, and as may be seen in particular in Figures 48 and 55, the insulating support 112 has complementary openings or recesses 330 and 332.

It will be noted that these recesses may be formed in the insulating support 112 even when the flap 222 is of the type described and shown with reference to the second embodiment, that is to say it is possible to standardize the insulating support 112 so as to use a flap 222 according to the second or the third embodiment of the invention.

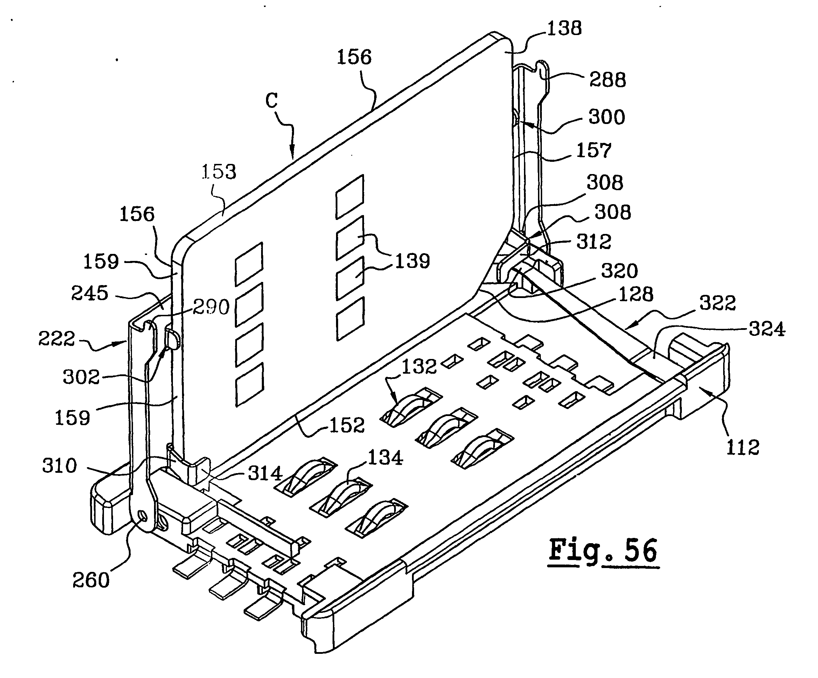

As may be seen in Figure 56, the tabs 300, 302, 308 and 310 serve firstly to longitudinally position the card C with respect to the closure flap 222, that is to say they engage here with the opposed transverse edges 157 and 159 of the card C.

As may be seen in Figure 41, the height "h" between the lower edge 315 of the tab 314 and the bottom 316 is small, about 0.6 mm, that is to say it is less than the thickness of the card (about 0.8 mm) so as to prevent the user from trying to insert the card without positioning it in the flap 222.

In Figure 56, the flap 222 is held in the open position by the spring 322 which thus returns it to the 90° vertical position and the card is in the process of being inserted vertically between its guiding tabs.

The card is in an unstable position with respect to the flap 222 and its back or upper face 156 is, for example, in contact with the inner face 245 of the flap 222.

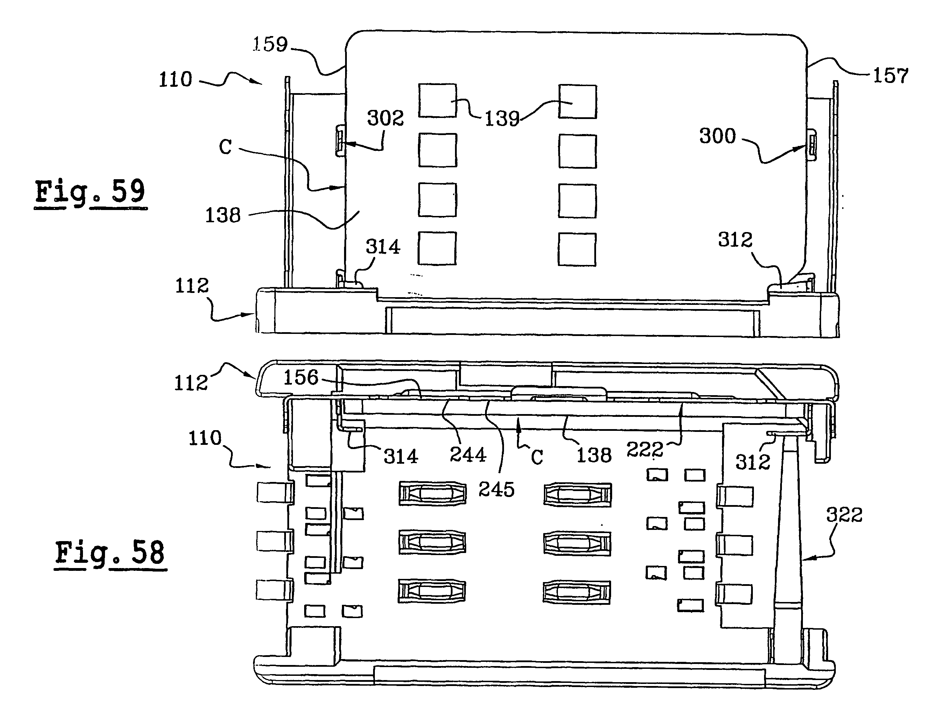

As may especially be seen in Figure 59, when the card is fully inserted vertically, that is to say its rear longitudinal edge 152 bears against the bottom 196 of the housing 194, the two lower retaining tabs 312 and 314 each extend opposite a facing part of the lower face 138 of the card C.

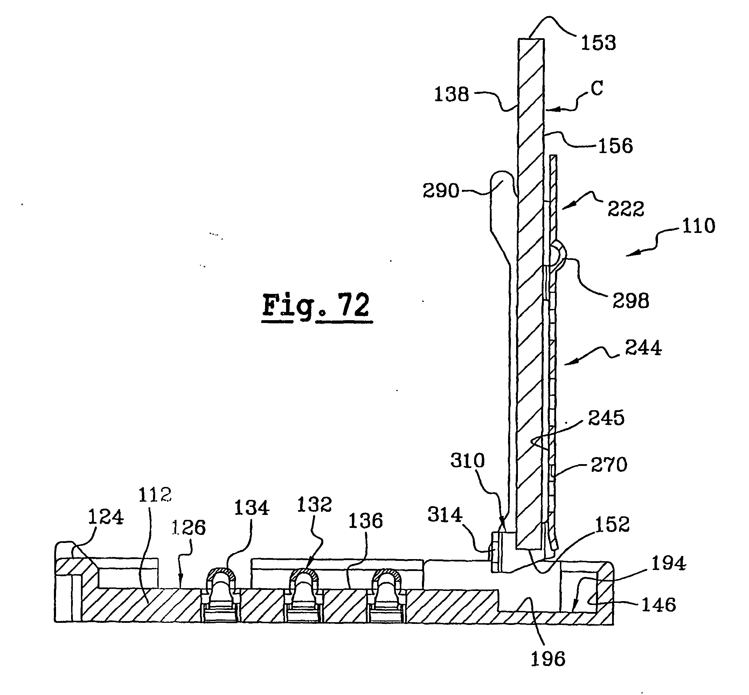

In Figure 72, the card C is shown in the process of being inserted vertically into the closure flap 222, that is to say it may be especially seen that its rear longitudinal edge 152 has not yet reached the bottom 196 of the recess 194 formed in the bottom 136 of the housing 126.

Likewise, the upper face 156 of the card C has not yet been pressed against the opposite face 245 of the plate 244 of the flap 222.

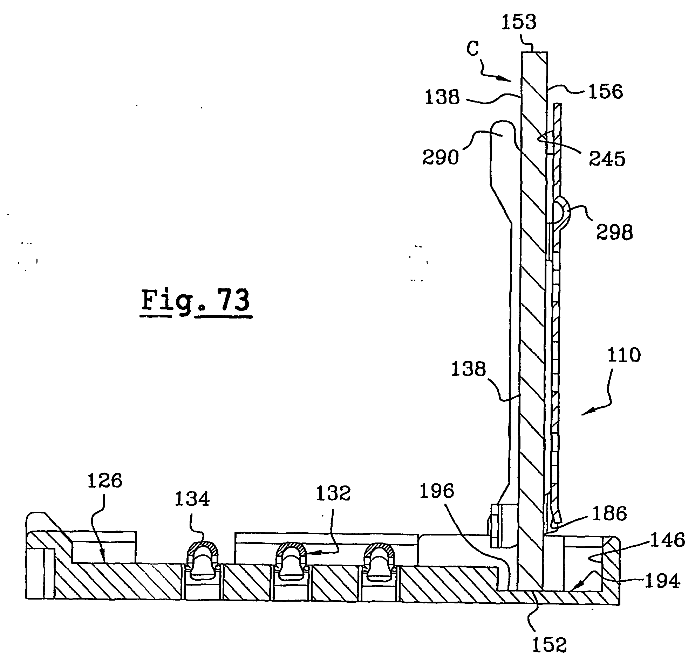

On the other hand, in the position illustrated in Figure 73, which also corresponds to the position illustrated previously in Figures 58 to 60, the card C is fully inserted vertically.

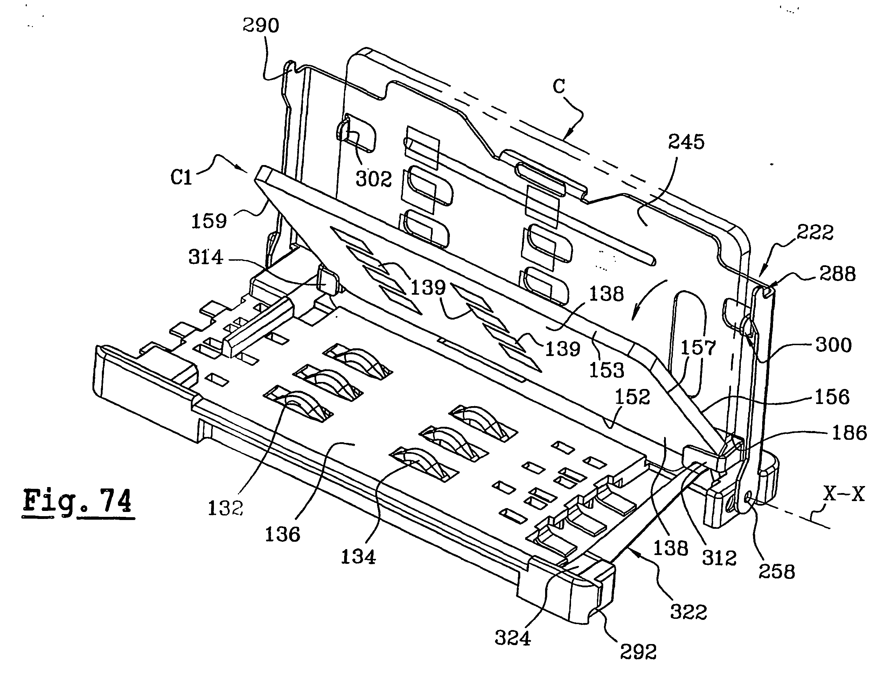

Figure 74 shows that, without moving the closure flap 222 (that is to say when the latter remains in the vertical open position), the card C can be tilted away from the flap so that it occupies the position illustrated by the solid lines C1, that is to say an intermediate position in which it has tilted and is retained, on the one hand, by the tabs 312 and 314 and, on the other hand, by the edge 186, these engaging with the facing portions of the lower face 138 and of the upper face 156 of the card C, respectively.

The card is thus held in an inclined intermediate position between longitudinal and parallel edges, and bears in the bottom 196 of the recess 194.

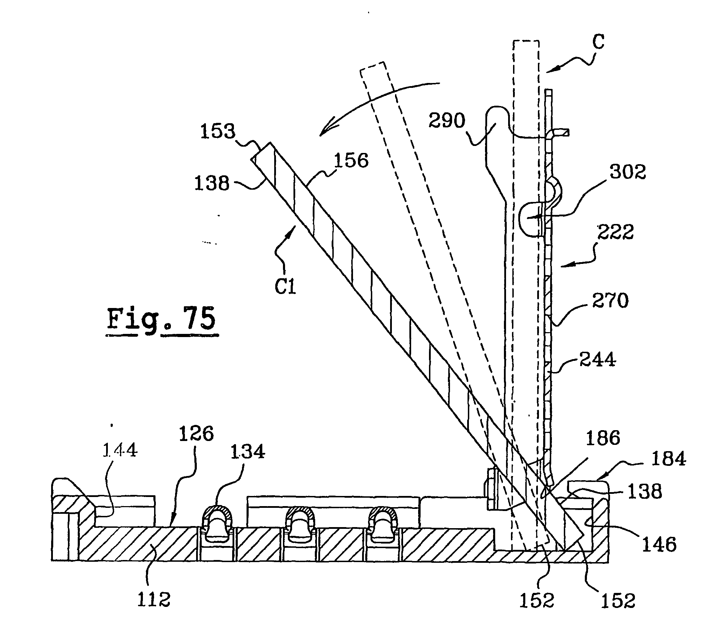

This tilting movement, comprising a combination of sliding and of pivoting about the edge 186, may be an accidental movement of the card, which beforehand was in unstable vertical equilibrium, or may result from the start of the pivoting movement of the flap 222 about its axis X-X, anticlockwise, for example, with regard to Figure 75 in which the card C has been shown in solid lines in the same position C1 as that illustrated in Figure 74, an intermediate position also being illustrated in dotted lines.

The tilting may also result from the fact that the user holds the apparatus in his hand in an imprecise orientation with respect to the vertical and consequently causes the card to automatically tilt when he lets go of it in the connector.

In the partially inclined or tilted position, the card C no longer engages with the upper guiding tabs 300 and 302.

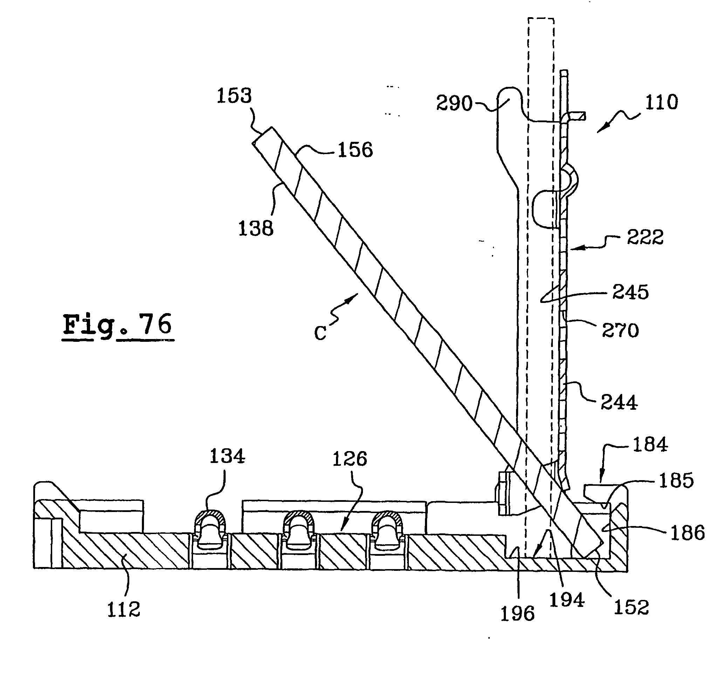

When the card is in its tilted stable position illustrated especially in Figure 76 in solid lines, corresponding to the start of tilting for the purpose of closing the flap 222, this closure movement may be continued by making the flap 222 rotate about its hinge axis X-X.

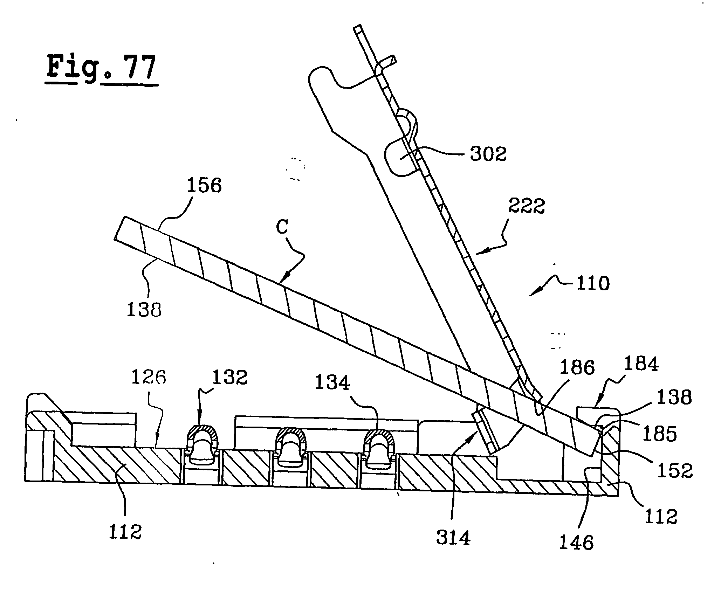

The moveable flap 222/card C combination then passes through an intermediate position illustrated in Figure 77 in which the rear part of the upper face 138 of the card C butts against the lower face 185 of the tab 184 of the insulating support 112, while the card is still retained by the edge 186 and the tabs 312 and 314.

The flap then makes an angle of approximately 60° with respect to the horizontal.

The card and the flap are able to occupy the same relative positions with respect to the insulating support 112 during the cycle of opening the flap, which takes the card C with it.

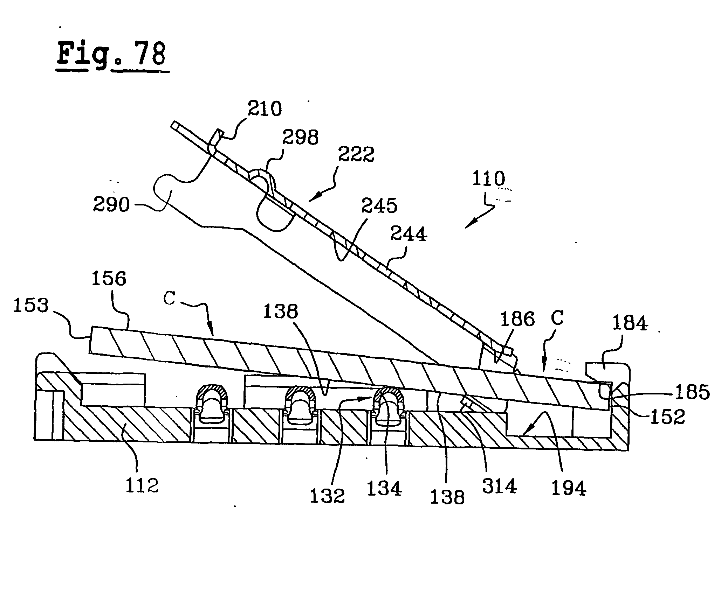

An intermediate position during closure is illustrated in Figure 78.

In this position, the lower face 138 of the card C has landed on the spoons 134 of the first, rear row of contact blades 132 and is thus in stable equilibrium.

The closure of the flap may continue by rotation, again in the anticlockwise direction with regard to Figure 78.

During this movement, the lower face 245 of the plate 244 comes into contact with the upper face 138 of the card C so as to press the latter against the blades 132 so that the flap can come into the horizontal position.

All that then remains to be done is to lock the flap, as explained previously.

The position illustrated in Figure 78 corresponds to an intermediate position of the card that the latter occupies during the movement of opening the flap 222, the card here making an angle of approximately 6 to 8° with respect to the horizontal.

The closure flap 222, in the design that has just been described with reference to the fifth embodiment, thus greatly improves the ergonomics of the connector according to the invention in so far as it makes it easier for the user to put the card in position in the connector, this positioning operation taking place by inserting it into the flap 222.

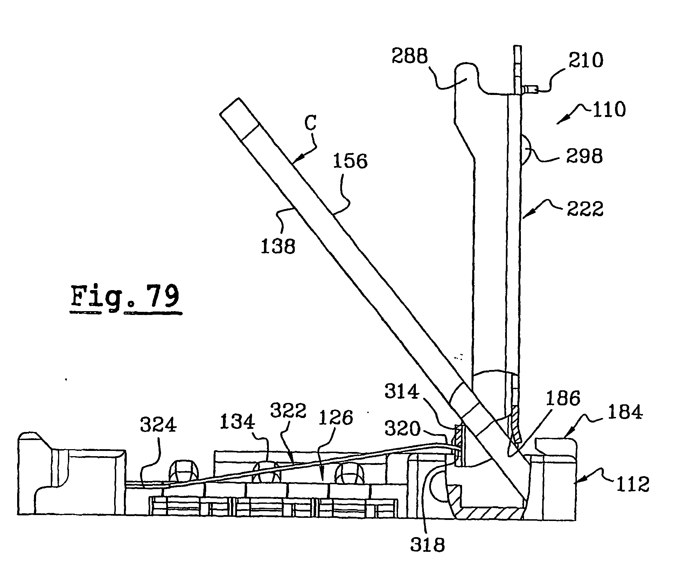

Likewise, after unlocking the flap, the design of the latter, according to the third embodiment, makes it easier for the card to be extracted in so far as all the user has to do is to open the flap, returning it to its vertical position, in order to bring the card into its inclined position illustrated by the solid lines in Figure 79, that is to say into a stable position in which the card makes an angle of about 50° with respect to the horizontal and in which it is particularly easy to grasp it.

All the other advantages inherent in the presence of a metal closure flap 222 that were mentioned previously are, of course, retained.

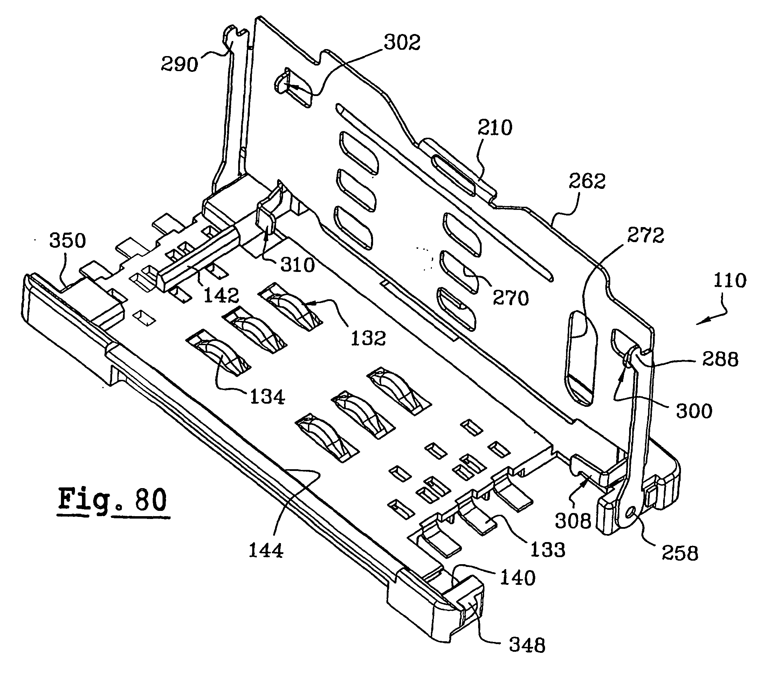

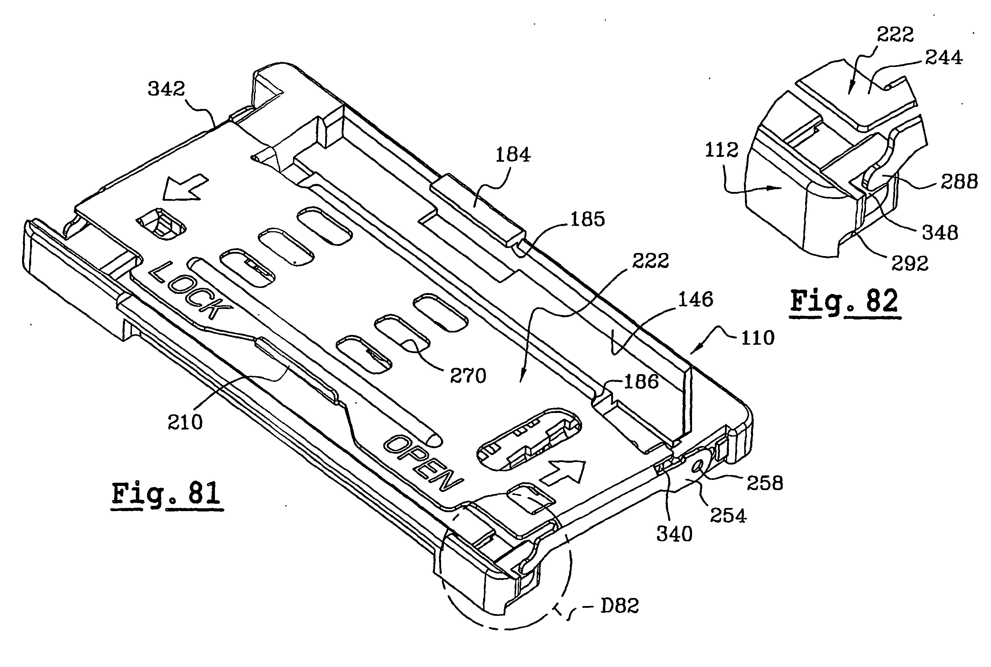

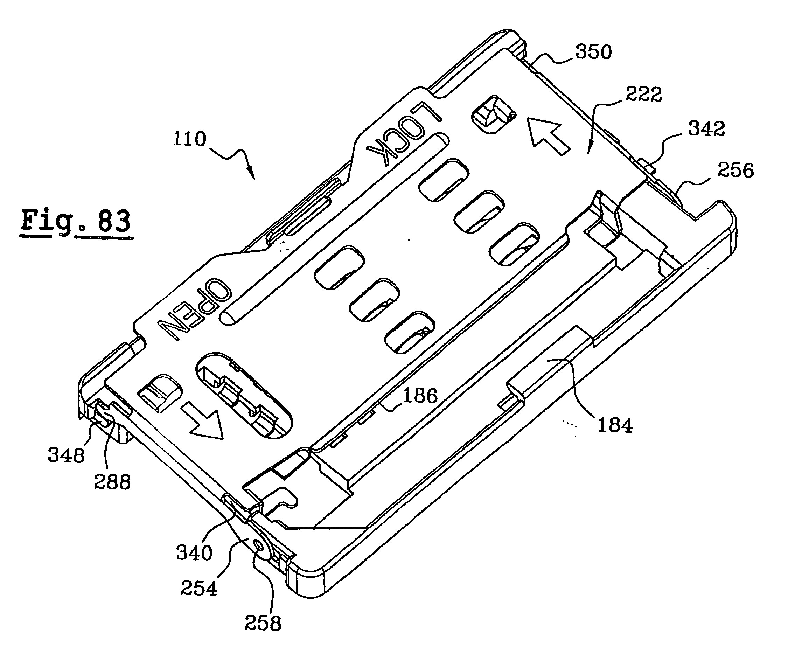

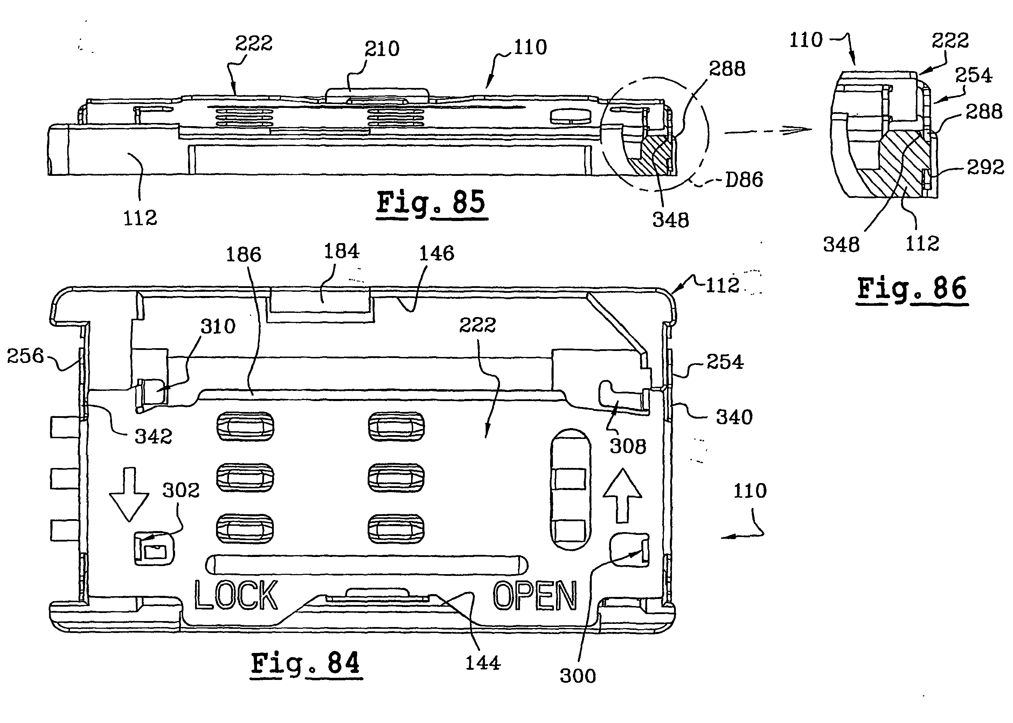

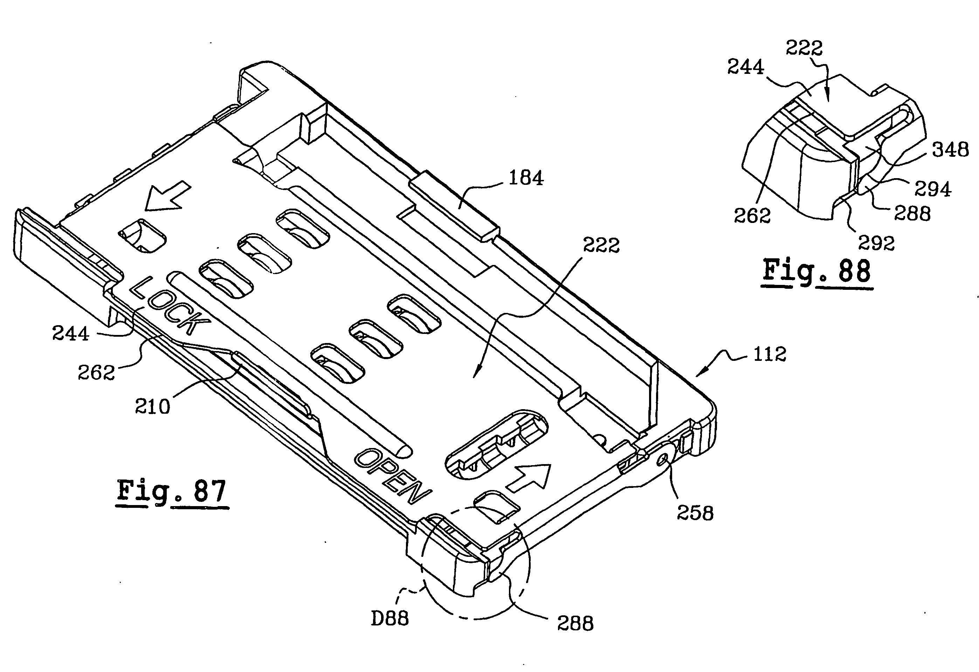

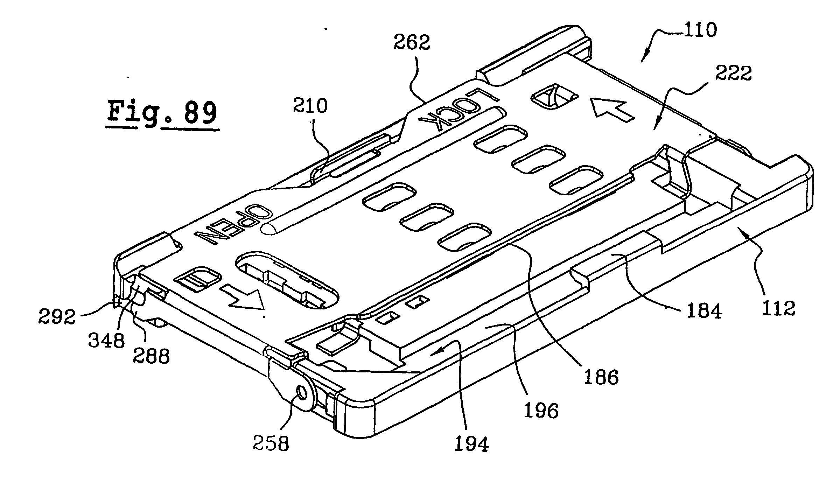

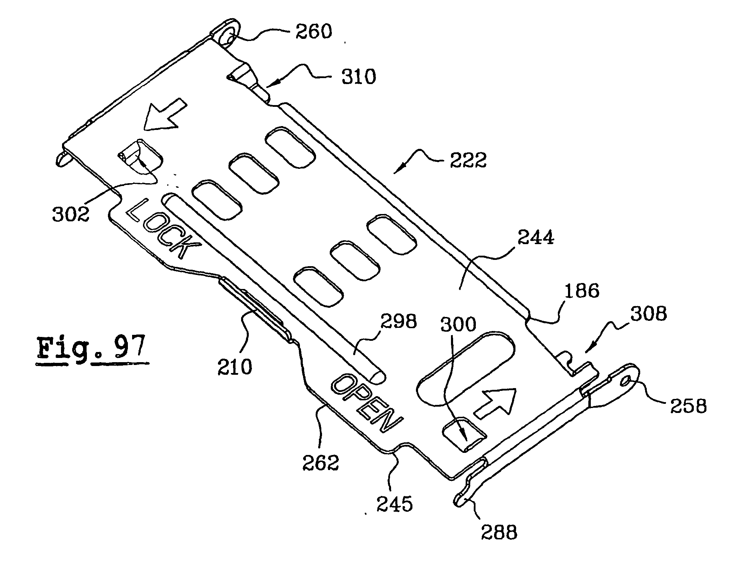

The fourth embodiment illustrated in Figures 80 to 97 will now be described by comparing it with the fourth embodiment described previously, from which it differs in the design of the means for hinging and locking the flap 222 with respect to the insulating support 112.

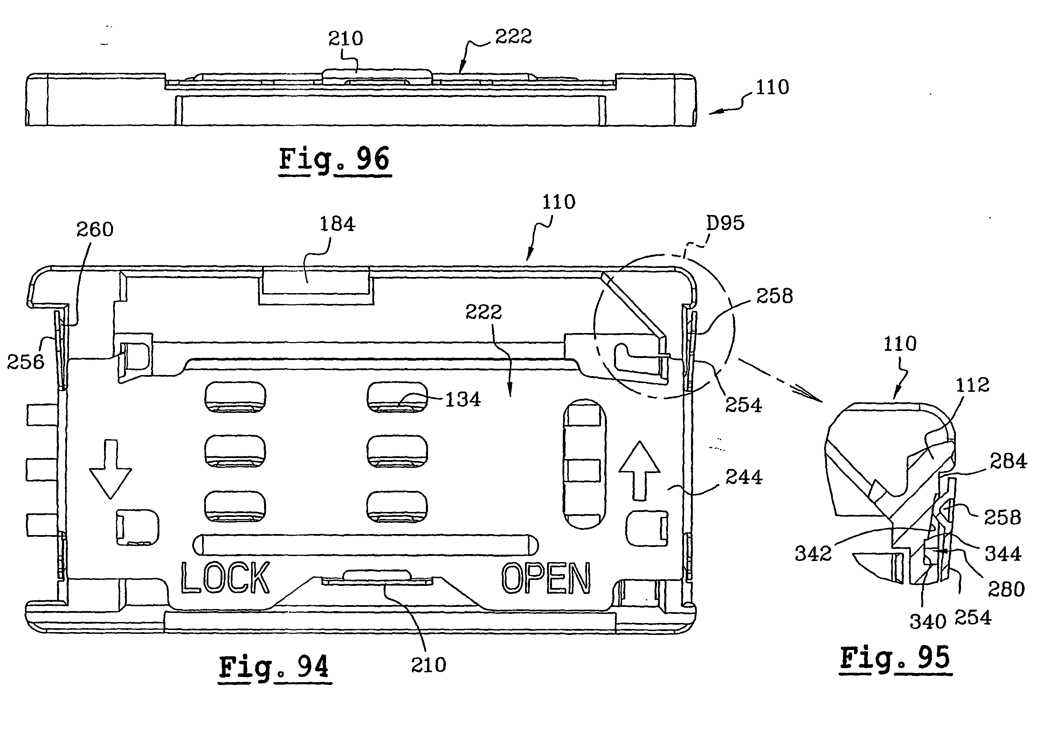

In this fourth embodiment, the bosses 258 and 260 for hinging the flap 222 are carried by rear sections of the hinge tabs 254 and 256 which are made in the form of arms that are elastically deformable because of the slots 340 and 342 formed for this purpose. Thus, as shown in Figures 94 and 95 the tabs 254 and 256 with the bosses 258 and 260 may move towards the outside of the connector, that is to say longitudinally to the right and to the left, respectively.

Each boss is housed in a groove 280, 282 formed opposite it in a corresponding lateral face 284, 286 of the insulating support, the shape of which differs from that described and illustrated previously by being combined with the hinge tabs which are elastically deformable arms.

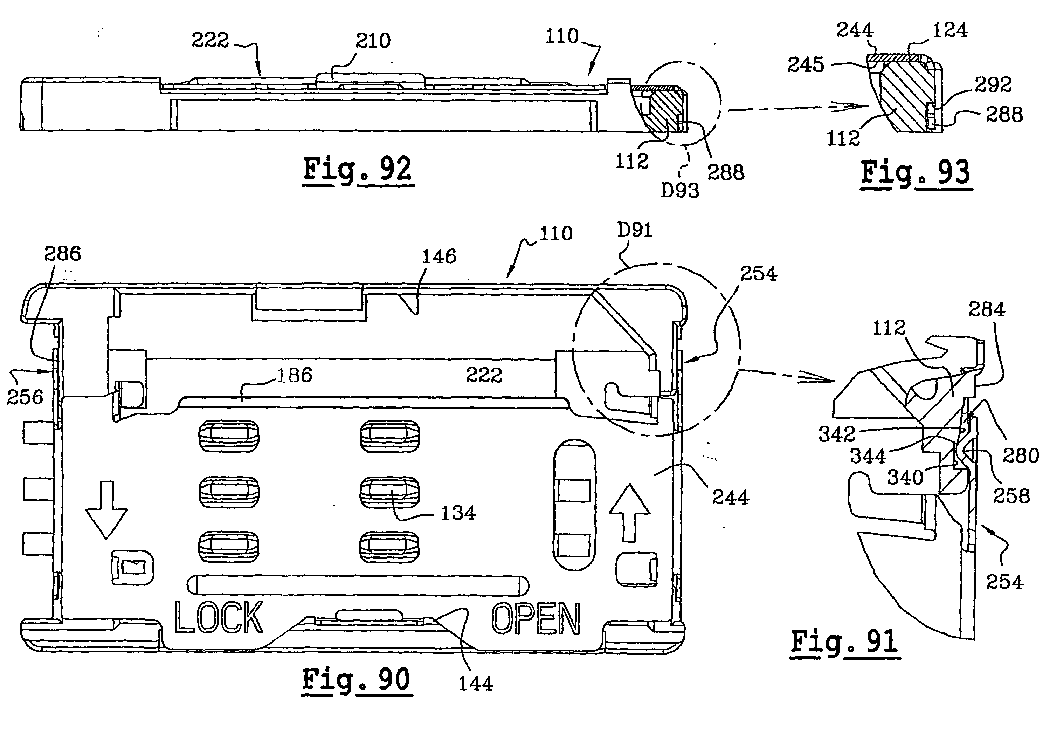

The groove 280 will now be described in detail with reference to Figures 91 and 95.

The groove has a flat front section 340, that is to say it lies in a vertical plane, and an inclined rear section forming a ramp 342, which is separated from the front section by a rib 344.

Thanks to this design, the stable transverse position of the bosses 258 and 260 of the flap 222 is in the front position illustrated in Figures 90 and 91 in which they are housed in the flat front sections 340.

It may also be seen in Figures 80 to 83 that the rounded lower edges of the hooks 288 and 290, during the final phase of closing the cap, then engage with facing parts 348 and 350 forming a ramp, so as to elastically deform each hook outwards so that each then is engaged, by elastic return, in the corresponding notch 292, 294 when the flap reaches its closed horizontal position.

Thus, when closing the flap, there is no translational movement of the flap with respect to the insulating support, the only relevant movement then being a pure rotational movement about the axis X-X.

To unlock the flap 222, starting from the locked position illustrated in Figures 90 to 92, the flap 222 must be "retracted", that is to say it must be moved transversely rearwards in the direction of the single arrow shown in Figure 90, by elastically deforming the tabs 254 and 256 as illustrated in Figures 94 and 95, in order to release the hooks 288 and 290.

The user can then open it slightly by means of the tongue 210 and/or due to the action of the contact blades 132, 134.

As soon as the user stops applying transverse force, the elastic energy stored by the tabs 254 and 256 causes the flap to return automatically to its stable forward transverse position.

To prevent the flap from being locked again if the user has not used the tongue 210 forming the handle for slightly opening the flap, provision may be made (according to an alternative embodiment, not shown) for the angle through which the tongue is bent to be less than 90° so that the component exerted on the latter in order to unlock it causes an upwardly directed vertical component applied on the flap 222.

In this fourth embodiment, it should be noted that there is no state in which the flap is completely closed, but not locked. This therefore provides additional security since there is no risk of the user using the apparatus with the card in a position in which all the contacts have not been made.

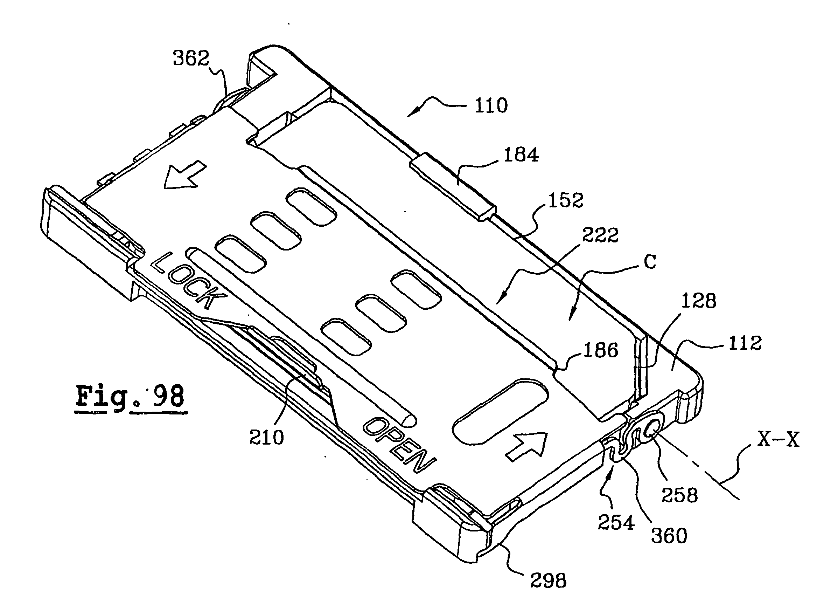

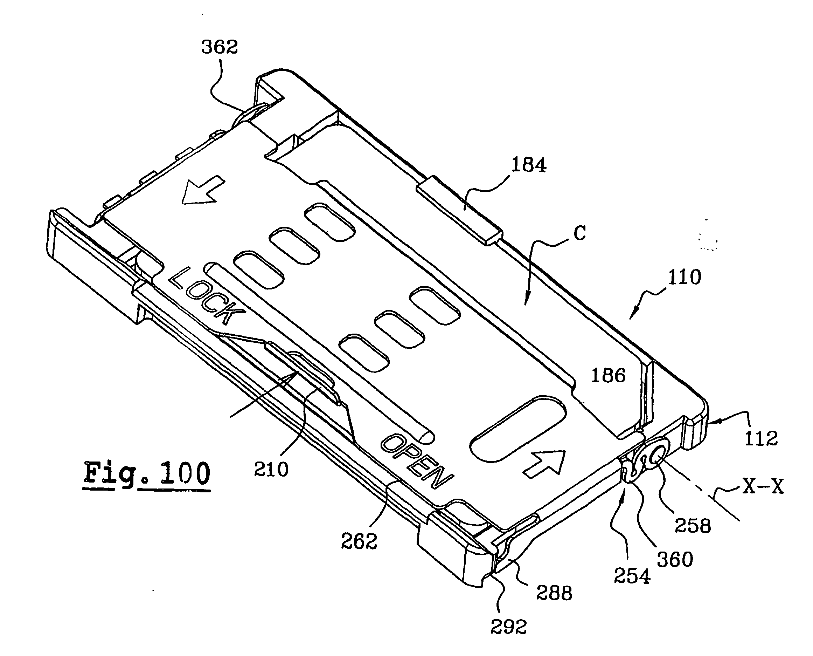

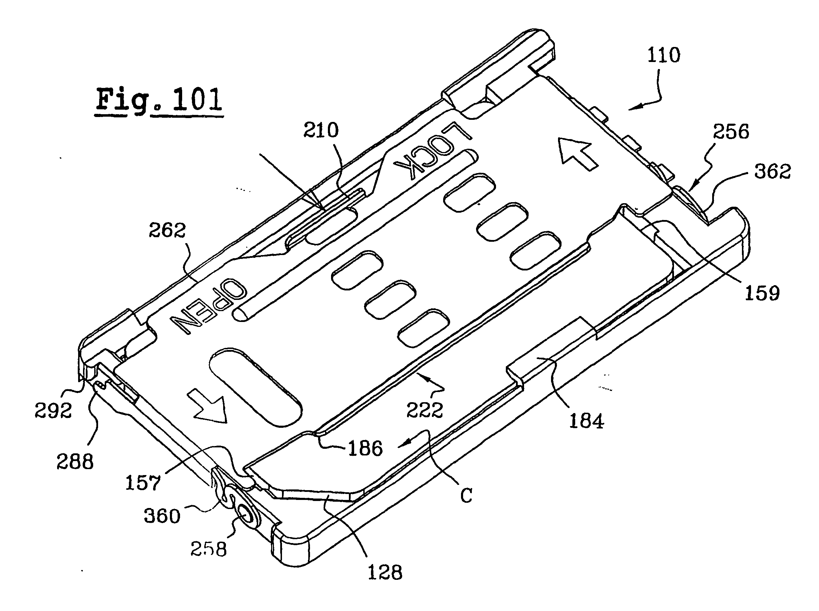

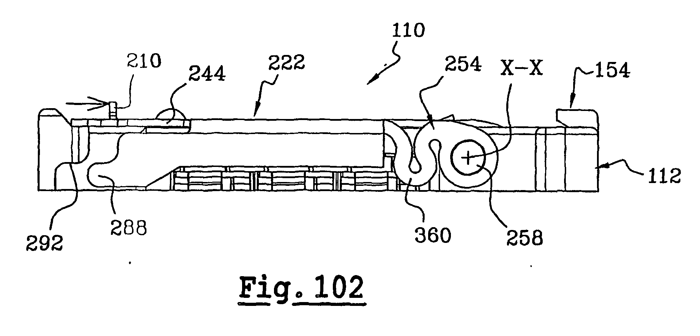

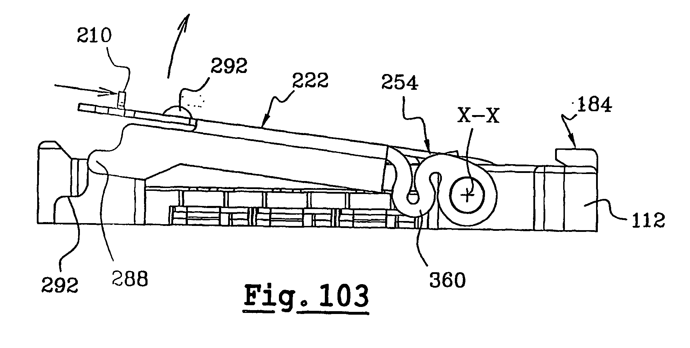

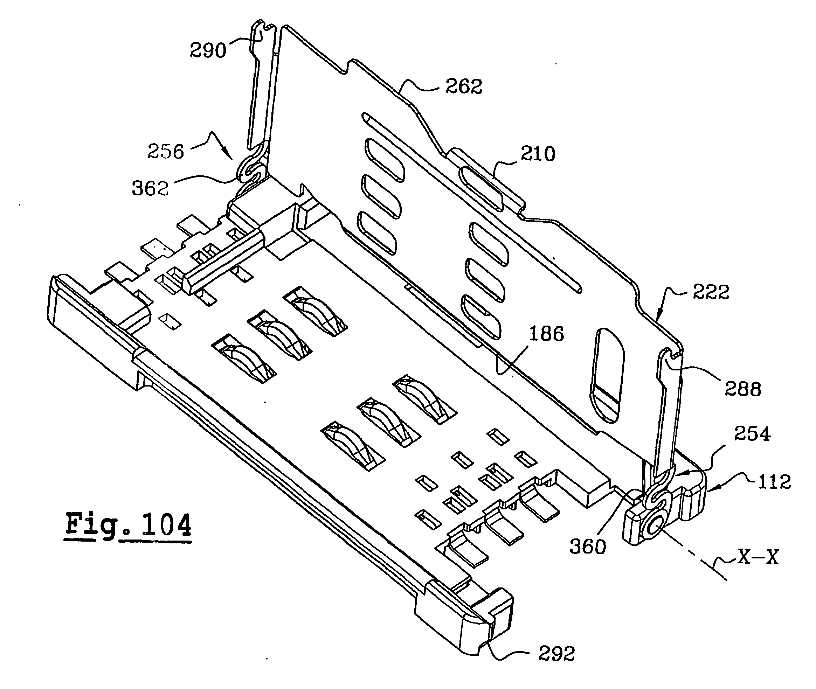

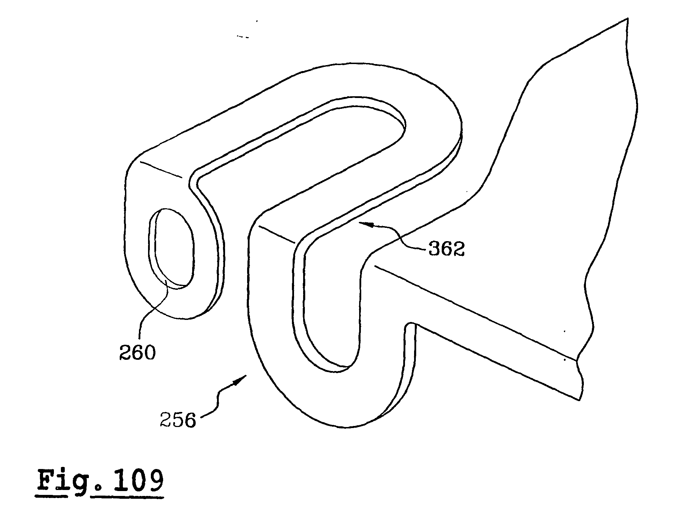

The fifth embodiment illustrated in Figures 98 to 109 is similar to the previous one, it differing therefrom only in the design of the hinge tabs of the flap which here fulfil the function of a spring for returning the flap to its stable locked position and which allow it to be unlocked by their elastic deformation.

Thus, each boss 258, 260 is permanently housed in a complementary hole in which it can rotate, in order for the flap to be hinged about the axis X-X, but from which it can never escape.

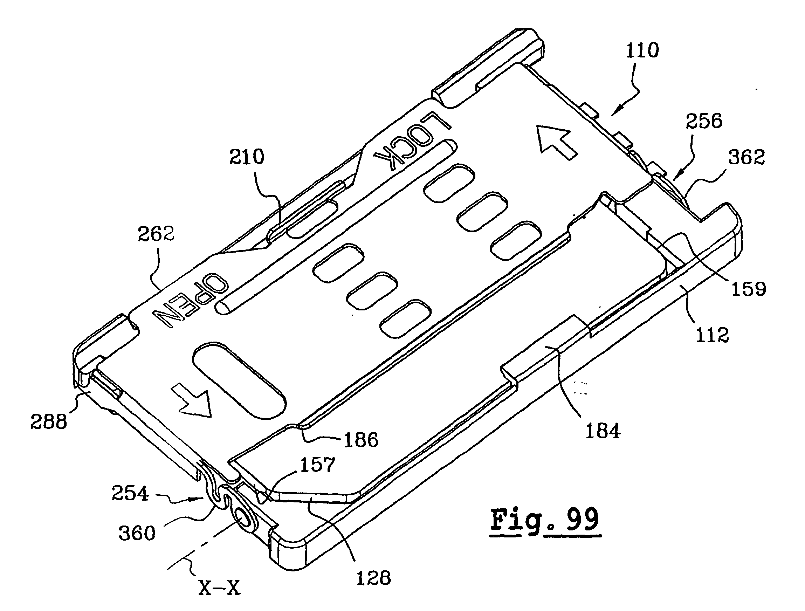

Each tab 254, 256 is designed to have the shape of an arm having an elastically deformable loop 360, 362 so as to be able to be compressed transversely and in its vertical plane, so as to allow the flap 222 to be "retracted" transversely rearwards starting from its locked stable position illustrated in Figures 98 and 99.

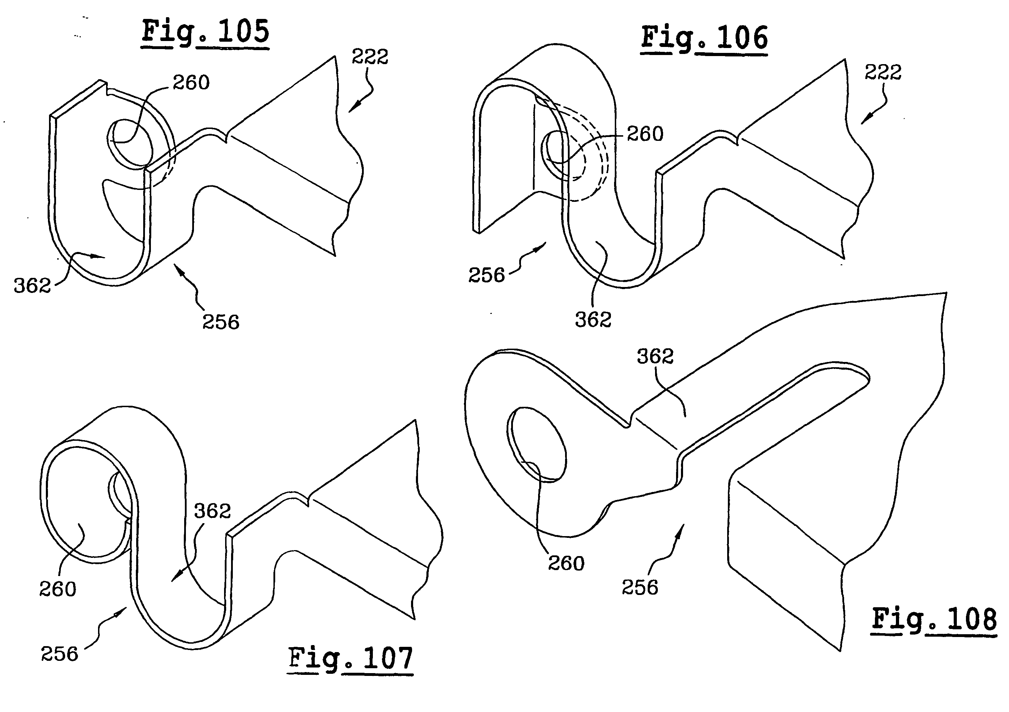

The alternative versions shown in Figures 105 to 109 illustrate various designs of a sprung hinge tab 256.

In particular, it may be seen that the bosses can be replaced by holes 260 which house spindle portions (not shown) forming part of the moulded insulating support 112.

These figures also show various shapes of the loop 362 or its equivalent.

Among other variants of the invention (which are not shown), it is possible, of course, to place the chamfer 130 in the left front corner of the insulating support in all the embodiments, that is to say as in the case of the first not inventive embodiments, this arrangement being compatible with the presence in the bottom 136 of the housing 126 of four pairs of transversely aligned contact blades.

It is also possible, of course, to make the edge 186 parallel to a transverse edge of the housing, that is to say parallel to one of the short sides 157, 159 of the card.

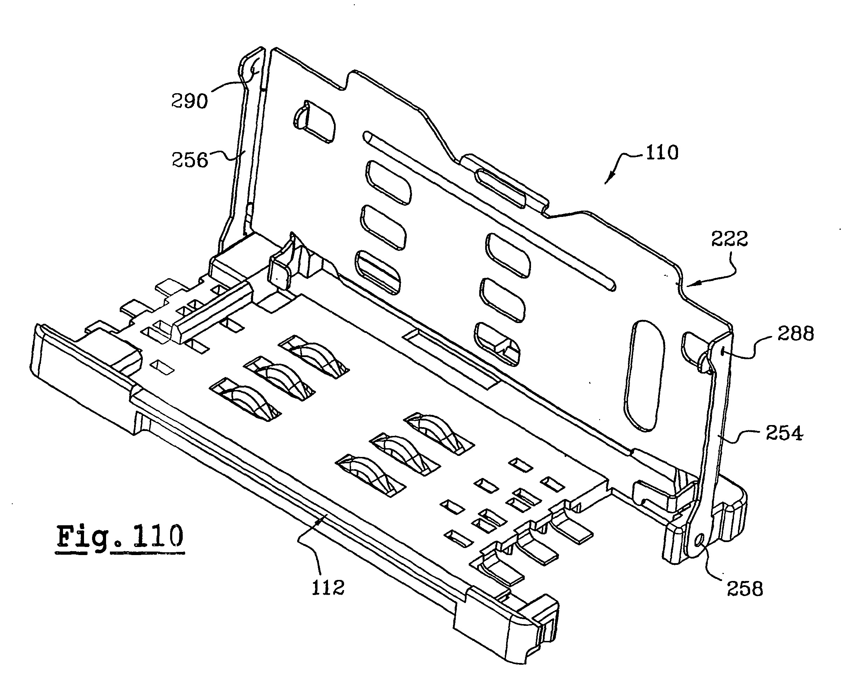

The finger-shaped hooks 288, 290, illustrated especially in Figures 80 to 97, may also be replaced by halfmoon-shaped "plunges" or embossments formed in the forward extensions of the lateral hinge tabs 254 and 256. This variant is shown in Figure 110 in which the complementary shapes and arrangements of the insulating support for engaging with the halfmoons are also shown.

A corresponding rib or protuberance, providing a tactile sensation during unlocking, may also be added to the complementary parts of the insulating support.

## Claims

1. Electrical connector (110) for a contact-type smart card (C), of rectangular general shape, having on its lower main face (138) conducting pads (139) which, when the card has been put manually in an approximately horizontal contact position, engaging with the contacting ends (134) of electrical conductors (132) in the form of elastically deformable blades arranged in the horizontal bottom (136) of a card housing (126) which is at least partly formed in a support (112) made of insulating material, which is open in its upper face (124), the housing being bounded laterally and transversely by two pairs of parallel edges (140-142, 144-146) for positioning the card (C) in the housing (126), the connector having an edge (186) for guiding the card (C) when putting the card into the housing (126), said guiding edge lying above the housing, parallel to a first (146) of the parallel edges of the housing (126), the upper face (156) of the card engaging with said guiding edge (186) in order to allow the card to be inserted into the housing (126) in an inclined plane parallel to the guiding edge (186), the upper face (156) of the card engaging with said guiding edge (186) to allow the card to be put in a horizontal contact position by sliding and pivoting along the guiding edge (186, A), **characterised in that** it includes a flap (222) which is mounted so as to be hinged to the support, about a horizontal axis (X-X) which is close and parallel to the said first (146) of the edges of the housing (126), between a retracted position in which the flap lies more or less vertically and a horizontal card-retaining position in which the flap lies horizontally above the housing (126), **in that** the guiding edge (186) is part of the flap (222), **in that** the hinge axis (X-X) of the flap is located between the said first edge (146) and the opposed parallel second edge (144) of the housing (126), and **in that**, when the flap is in its retracted extreme angular position, the edge (186) for guiding the card is offset vertically upwards with respect to the hinge axis (X-X) of the flap and is located between the said first edge (146) of the housing and the hinge axis (X-X).

2. Connector according to the preceding claim, **characterized in that** said guiding edge (186) is close to the said first (146) of the edges of the housing (126).

3. Connector according to the preceding claim, **characterized in that** the said first (146) of the edges of the housing forms a stop against which a corresponding first edge (152 or 153) of the card (C) bears while the card is being put into the contact position.

4. Connector according to Claim 3, **characterized in that** the said stop edge (146) is elastically deformable (190, 192) in a horizontal direction perpendicular to this edge in order to make the card bear elastically against an opposed parallel second edge (144) of the housing (126).

5. Connector according to either of Claims 3 and 4, **characterized in that** the bottom (136) of the housing formed in the insulating support (112) includes a recess (194) which lies along the said stop edge (146) and which receives the said first edge of the card when putting the latter into position by sliding and pivoting the card along the guiding edge (186).

6. Connector according to the preceding claim, **characterized in that** the bottom (196) of the recess (194) is offset vertically downwards with respect to the bearing plane of the card (C) in the horizontal contact position.

7. Connector according to any one of the preceding claims, **characterized in that** it has a plurality of electrical conductors (132) in the form of elastically deformable blades which lie parallel to the said first (146) of the edges of the housing (126) and each of which has a curved first end (134) for contact with a corresponding pad (139) on the card, which pad projects vertically upwards from the bottom (136) of the housing (126).

8. Connector according to any one of the preceding claims, **characterized in that** the card (C) is rectangular and **in that** the guiding edge (186) is parallel to the length of the complementary rectangular housing (126).

9. Connector according to anyone of the preceding claims, **characterized in that**, in the card-retaining position, a part (154, 244) of flap (222) lies above a peripheral part of the upper face (138) of the card near a second edge (153 or 152) of the card which is opposite the said first edge of the card.

10. Connector according to claim 9 , **characterized in that** the flap (222) is mounted so as to move translationally with respect to the insulating support (112) in a horizontal direction perpendicular to the said first (146) of the edges of the housing (126).

11. Connector according anyone of the preceding claims, **characterized in that** the flap (222) includes means (300, 302, 308, 310) which, when the flap is in the retracted position, hold the card (C) in a position substantially adjacent to the internal face (245) of the flap (222, 244) and **in that** closing the flap causes the card to be inserted into the housing (126) and then put into the contact position by sliding and pivoting along the said edge (186).

12. Connector according to the preceding claim, **characterized in that** the said holding means allow the card to tilt with respect to the flap (222) until the card reaches an intermediate position in which the upper face (138) of the card bears against the guiding edge (186).

13. Connector according to the preceding claim, **characterized in that** the holding means consist of at least one pair of opposed holding tabs (300-302, 308-310) which lie along the edges (357, 359) of the card which are perpendicular to the said first (146) of the edges of the housing and which (308, 310) engage with facing portions of the lower face (156) of the card.

14. Connector according to anyone of the preceding claims, **characterized in that** the moveable flap (222) is elastically returned (322) to its retracted position and **in that** means (288, 290, 292, 294) are provided for locking the flap (222) in its position for retaining the card (C).

15. Connector according to Claim 14, **characterized in that** the locking means are means for automatically locking the flap when the latter reaches its card-retaining position.

## Patentansprüche

1. Elektrischer Verbinder (110) für eine Chipkarte (C) mit Kontakten, von rechteckiger allgemeiner Form, mit leitenden Kontaktflächen (139) auf ihrer unteren Hauptfläche (138), welche sich, wenn die Karte manuell in eine ungefähr waagerechte Kontaktposition gebracht wurde, mit den leitenden Enden (134) von elektrischen Leitern (132) in Form von elastisch verformbaren Schenkeln überdecken, die in dem waagerechten Boden (136) eines Kartengehäuses (126) angeordnet sind, das wenigstens teilweise in einem Träger (112) aus isolierendem Material gebildet ist, welcher an seiner oberen Fläche (124) geöffnet ist, wobei das Gehäuse seitlich und transversal von zwei Paaren paralleler Kanten (140-142, 144-146) eingefasst ist, um die Karte (C) in dem Gehäuse (126) zu positionieren, wobei der Verbinder eine Kante (186) zum Führen der Karte (C) aufweist, wenn die Karte in das Gehäuse (126) eingeführt wird, wobei die Führungskante über dem Gehäuse liegt, parallel zu einer ersten (146) der parallelen Kanten des Gehäuses (126), wobei sich die obere Fläche (156) der Karte mit der Führungskante (186) überdeckt, um zu ermöglichen, dass die Karte in das Gehäuse (126) in einer schrägen Ebene parallel zu der Führungskante (186) eingesetzt wird, wobei sich die obere Fläche (156) der Karte mit der Führungskante (186) überdeckt, um zu ermöglichen, dass die Karte in einer waagerechten Kontaktposition durch Schieben und Schwenken entlang der Führungskante (186, A) eingeführt wird, **dadurch gekennzeichnet, dass** dieser eine Klappe (222) aufweist, welche so befestigt ist, dass sie an dem Träger um eine waagerechte Achse (X-X) drehbar gelagert ist, welche nahe und parallel zu der ersten (146) der Kanten des Gehäuses (126) ist, zwischen einer eingeklappten Position, in der die Klappe mehr oder weniger senkrecht liegt und einer waagerechten Kartenhalteposition, in der die Klappe waagerecht über dem Gehäuse (126) liegt, **dadurch**, dass die Führungskante (186) Teil der Klappe (222) ist, **dadurch**, dass die Drehgelenkachse (X-X) der Klappe zwischen der ersten Kante (146) und der gegenüberliegenden parallelen zweiten Kante (144) des Gehäuses (126) angeordnet ist, und **dadurch**, dass, wenn sich die Klappe in ihrer geklappten äußersten Winkelposition befindet, die Kante (186) zum Führen der Karte vertikal nach oben versetzt ist bezogen auf die Drehgelenkachse (X-X) der Klappe und zwischen der ersten Kante (146) des Gehäuses und der Drehgelenkachse (X-X) angeordnet ist.

2. Verbinder gemäß dem vorausgegangenen Anspruch, **dadurch gekennzeichnet, dass** die Führungskante (186) in der Nähe der ersten (146) der Kanten des Gehäuses (126) ist.

3. Verbinder gemäß dem vorausgegangenen Anspruch, **dadurch gekennzeichnet, dass** die erste (146) der Kanten des Gehäuses einen Anschlag bildet, gegen den eine entsprechende erste Kante (152 oder 153) der Karte (C) lagert, während die Karte in die Kontaktposition gebracht wird.

4. Verbinder gemäß Anspruch 3, **dadurch gekennzeichnet, dass** die Anschlagkante (146) elastisch verformbar (190, 192) in einer waagerechten Position senkrecht zu dieser Kante ist, damit die Karte elastisch gegen eine gegenüberliegende parallele zweite Kante (144) des Gehäuses (126) lagert.

5. Verbinder gemäß Anspruch 3 oder 4, **dadurch gekennzeichnet, dass** der Boden (136) des Gehäuses, der in dem isolierenden Träger (112) gebildet ist, eine Aussparung (194) aufweist, welche entlang der Anschlagkante (146) liegt und welche die erste Kante der Karte aufnimmt, wenn die letztgenannte durch Schieben und Schwenken entlang der Führungsachse (186) in Position gebracht wird.

6. Verbinder gemäß dem vorausgegangenen Anspruch, **dadurch gekennzeichnet, dass** der Boden (196) der Aussparung (194) bezogen auf die Lagerebene der Karte (C) in der waagerechten Kontaktposition senkrecht nach unten versetzt ist.

7. Verbinder gemäß einem der vorausgegangenen Ansprüche, **dadurch gekennzeichnet, dass** dieser eine Vielzahl an elektrischen Leitern (132) in Form von elastisch verformbaren Schenkeln aufweist, welche parallel zu der ersten (146) der Kanten des Gehäuses (126) liegen und welche jeweils ein gebogenes erstes Ende (134) zum Kontakt mit einer entsprechenden Kontaktfläche (139) auf der Karte aufweisen, wobei die Kontaktfläche senkrecht nach oben von dem Boden (136) des Gehäuses (126) vorsteht.

8. Verbinder gemäß einem der vorausgegangenen Ansprüche, **dadurch gekennzeichnet, dass** die Karte (C) rechteckig ist und **dadurch**, dass die Führungskante (186) parallel zu der Länge des komplementären rechteckigen Gehäuses (126) ist.

9. Verbinder gemäß einem der vorausgegangenen Ansprüche, **dadurch gekennzeichnet, dass** in der Kartenhalteposition ein Teil (154, 244) der Klappe (222) über einem peripheren Teil der oberen Fläche (138) der Karte in der Nähe einer zweiten Kante (153 oder 152) der Karte liegt, die gegenüber der ersten Kante der Karte liegt.

10. Verbinder gemäß Anspruch 9, **dadurch gekennzeichnet, dass** die Klappe (222) so befestigt ist, dass sie bezogen auf den isolierenden Träger (112) in einer waagerechten Richtung senkrecht zu der ersten (146) der Kanten des Gehäuses (126) schiebbar beweglich ist.

11. Verbinder gemäß einem der vorausgegangenen Ansprüche, **dadurch gekennzeichnet, dass** die Klappe (222) Mittel (300, 302, 308, 310) aufweist, welche, wenn sich die Klappe in der geklappten Position befindet, die Karte (C) in einer Position halten, die im wesentlichen an die Innenfläche (245) der Klappe (222, 244) angrenzt, und **dadurch**, dass das Schließen der Klappe bewirkt, dass die Karte in das Gehäuse (126) eingesetzt und dann durch Schieben und Schwenken entlang der Kante (186) in Kontaktposition gebracht wird.

12. Verbinder gemäß dem vorausgegangenen Anspruch, **dadurch gekennzeichnet, dass** es die Haltemittel ermöglichen, dass die Karte gegenüber der Klappe (222) kippen kann, bis die Karte eine Zwischenposition erreicht, in welcher die obere Fläche (138) der Karte an der Führungskante (186) liegt.

13. Verbinder gemäß dem vorausgegangenen Anspruch, **dadurch gekennzeichnet, dass** die Haltemittel aus wenigstens einem Paar gegenüberliegender Haltezungen (300-302, 308-310) bestehen, welche entlang der Kanten (357, 359) der Karte liegen, welche senkrecht zu der ersten (146) der Kanten des Gehäuses liegen und welche (308, 310) sich mit gegenüberliegenden Bereichen der unteren Fläche (156) der Karte überdecken.

14. Verbinder gemäß einem der vorausgegangenen Ansprüche, **dadurch gekennzeichnet, dass** die bewegliche Klappe (222) elastisch auf ihre geklappte Position zurückgebracht (322) wird, und **dadurch**, dass Mittel (288, 290, 292, 294) vorgesehen sind, um die Klappe (222) in ihrer Position zum Halten der Karte (C) festzusetzen.

15. Verbinder gemäß Anspruch 14, **dadurch gekennzeichnet, dass** die Festsetzmittel Mittel sind, um die Klappe automatisch festzusetzen, wenn die letztgenannte ihre Kartenhalteposition erreicht.

## Revendications

1. Connecteur électrique (110) pour une carte (C) à mémoire à circuit(s) intégré(s) à contact, de forme générale rectangulaire, comportant sur sa face principale inférieure (138) des plages conductrices (139) qui, lorsque la carte a été mise en place manuellement dans une position sensiblement horizontale de contact, coopèrent avec les extrémités de contact (134) de conducteurs électriques (132) en forme de lames déformables élastiquement agencées dans le fond (136) horizontal d'un logement (126) de carte qui est formé au moins en partie dans un support (112) en matériau isolant, qui est ouvert dans sa face supérieure (124), le logement étant délimité latéralement et transversalement par deux paires de bords parallèles (140-142, 144-146) pour positionner la carte (C) dans le logement (126), le connecteur ayant une arête (186) de guidage de la carte (C) lors de la mise en place de la carte dans le logement (126), ladite arête de guidage s'étendant au-dessus du logement, parallèlement à un premier (146) des bords parallèles du logement (126), la face supérieure (156) de la carte coopérant avec ladite arête de guidage (186) pour permettre l'introduction de la carte dans le logement (126) selon un plan incliné parallèle à l'arête de guidage (186), la face supérieure (156) de la carte coopérant avec ladite arête de guidage (186) pour permettre la mise en place de la carte en position horizontale de contact par glissement et pivotement le long de l'arête (186, A), **caractérisé en ce qu'**il comprend un volet (222) monté articulé sur le support autour d'un axe (X-X) qui est voisin et parallèle audit premier (146) des bords du logement (126), entre une position escamotée dans laquelle le volet s'étend plus ou moins verticalement et une position horizontale de retenue de la carte, dans laquelle le volet s'étend horizontalement au dessus du logement (126), **en ce que** l'arête de guidage (186) appartient au volet (222), **en ce que** l'axe (X-X) d'articulation du volet (222) est situé entre ledit premier bord (146) et le deuxième bord (144) parallèle et opposé du logement (126), et **en ce que**, lorsque le volet est dans sa position angulaire extrême escamotée, l'arête (186) de guidage de la carte est décalée verticalement vers le haut par rapport à l'axe d'articulation (X-X) du volet et est située entre ledit premier bord (146) du logement et l'axe d'articulation (X-X).

2. Connecteur selon la revendication précédente, **caractérisé en ce que** ladite arête de guidage (186) est voisine dudit premier (146) des bords du logement (126).

3. Connecteur selon la revendication précédente, **caractérisé en ce que** ledit premier (146) des bords du logement constitue une butée sur laquelle un premier bord correspondant (152 ou 153) de la carte (C) vient en appui au cours de la mise en place de la carte en position de contact.

4. Connecteur selon la revendication 3, **caractérisé en ce que** ledit bord de butée (146) est déformable élastiquement (190, 192) selon une direction horizontale perpendiculaire à ce bord pour solliciter la carte élastiquement en appui contre un deuxième bord (144) parallèle et opposé du logement (126).

5. Connecteur selon l'une des revendications 3 ou 4, **caractérisé en ce que** le fond (136)du logement formé dans le support isolant (112) comporte un évidement (194) qui s'étend le long dudit bord de butée (146) et qui reçoit ledit premier bord de la carte lors de la mise en place par glissement et pivotement de la carte le long de l'arête de guidage (186).

6. Connecteur selon la revendication précédente, **caractérisé en ce que** le fond (196) de l'évidement (194) est décalé verticalement vers le bas par rapport au plan d'appui de la carte (C) en position horizontale de contact.

7. Connecteur selon l'une quelconque des revendications précédentes, **caractérisé en ce qu'**il comporte une pluralité de conducteurs électriques (132) en forme de lames déformables élastiquement qui s'étendent parallèlement audit premier (146) des bords du logement (126) et dont chacune comporte une première extrémité incurvée (134) de contact avec une plage correspondante (139) de la carte qui fait saillie verticalement vers le haut au-delà du fond (136) du logement (126).

8. Connecteur selon l'une quelconque des revendications précédentes, **caractérisé en ce que** la carte (C) est rectangulaire, et **en ce que** l'arête de guidage (186) est parallèle à la longueur du logement rectangulaire complémentaire (126).

9. Connecteur selon l'une quelconque des revendications précédentes, **caractérisé en ce que**, en position de retenue de la carte, une partie (154, 244) de volet (222) s'étend au-dessus d'une partie périphérique de la face supérieure (138) de la carte proche d'un second bord (153 ou 152) de la carte qui est opposé audit premier bord de la carte.

10. Connecteur selon la revendication 9, **caractérisé en ce que** le volet (222) est monté mobile en translation par rapport au support isolant (112) selon une direction horizontale perpendiculaire audit premier (146) des bords du logement (126).

11. Connecteur selon l'une quelconque des revendications précédentes, **caractérisé en ce que** le volet (222) comporte des moyens (300, 302, 308, 310) qui, lorsque le volet est en position escamotée, maintiennent la carte (C) dans une position sensiblement adjacente à la face interne (245) du volet (222, 244), et **en ce que** la fermeture du volet provoque l'introduction de la carte dans le logement (126) puis sa mise en place en position de contact par glissement et pivotement le long de ladite arête (186).

12. Connecteur selon la revendication précédente, **caractérisé en ce que** lesdits moyens de maintien autorisent un basculement de la carte par rapport au volet (222) jusqu'à ce que la carte atteigne une position intermédiaire dans laquelle la face supérieure (138) de la carte est en appui contre l'arête de guidage (186).

13. Connecteur selon la revendication précédente, **caractérisé en ce que** les moyens de maintien sont constitués par au moins une paire de pattes opposées de maintien (300-302, 308-310) qui s'étendent le long des bords (357, 359) de la carte perpendiculaires audit premier (146) des bords du logement et qui (308, 310) coopèrent avec des portions en vis-à-vis de la face inférieure (156) de la carte.

14. Connecteur selon l'une quelconque des revendications précédentes, **caractérisé en ce que** le volet (222) mobile est rappelé élastiquement (322) vers sa position escamotée, et **en ce qu'**il est prévu des moyens (288, 290, 292, 294) de verrouillage du volet (222) dans sa position de retenue de la carte (C).

15. Connecteur selon la revendication 14, **caractérisé en ce que** les moyens de verrouillage sont des moyens de verrouillage automatique du volet lorsque ce dernier atteint sa position de retenue de la carte.
